(19) Europäisches Patentamt / European Patent Office / Office européen des brevets

(11) EP 4 772 553 A1

(12) **EUROPEAN PATENT APPLICATION**
published in accordance with Art. 153(4) EPC

(43) Date of publication:
**08.07.2026 Bulletin 2026/28**

(21) Application number: **24859912.8**

(22) Date of filing: **29.08.2024**

(51) International Patent Classification (IPC):
***C08F 290/06*** *(2006.01)*

(52) Cooperative Patent Classification (CPC):
**C08F 290/06**

(86) International application number:
**PCT/JP2024/030994**

(87) International publication number:
**WO 2025/047885 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.08.2023 JP 2023138774**

(71) Applicant: **Mitsubishi Chemical Corporation**
**Tokyo 100-8251 (JP)**

(72) Inventors:
- **TANIGUCHI, Kana**
  **Tokyo 100-8251 (JP)**
- **SUGIHARA, Mitsunori**
  **Tokyo 100-8251 (JP)**
- **MORIOKA, Toshifumi**
  **Tokyo 100-8251 (JP)**

(74) Representative: **Vossius & Partner Patentanwälte Rechtsanwälte mbB**
**Siebertstraße 3**
**81675 München (DE)**

(54) **RESIN COMPOSITION**

(57) A resin composition containing: a (meth)acrylic copolymer containing a structural unit (A) based on a specific metal atom-containing polymerizable monomer (a) and a structural unit (B) based on a specific polysiloxane block-containing polymerizable monomer (b); and an organic solvent, wherein a content of the structural unit (A) is from 5 to 35 mass%, a content of the structural unit (B) is from 35 to 75 mass%, and a content of the structural unit based on a (meth)acrylic macromonomer is less than 13 mass% relative to a total mass of all structural units constituting the (meth)acrylic copolymer, a weight-average molecular weight of the (meth)acrylic copolymer is 2000 or more and 6500 or less, and a VOC content is 500 g/L or less.

EP 4 772 553 A1

## Description

### Technical Field

The present invention relates to a resin composition.

The present application claims priority to JP 2023-138774 filed in Japan on August 29, 2023, the content of which is incorporated herein by reference.

### Background Art

Marine structures and ships are known to be painted with an antifouling paint to prevent the deposition of marine organisms that cause corrosion at portions in contact with seawater and a decrease in navigation speed.

Known antifouling paints include self-polishing antifouling paints. Self-polishing antifouling paints typically contain a hydrolyzable resin and an antifouling agent. With a paint film formed with such an antifouling paint, the surface of the paint film is gradually dissolved in seawater and renewed (self-polished) and thus, the antifouling agent is constantly exposed on the paint film surface. Thus, the paint film exhibits an antifouling effect over a long period of time.

The following have been proposed as self-polishing antifouling paints.

- A paint composition containing a copolymer containing a structural unit based on a metal atom-containing polymerizable monomer containing a divalent metal atom (Patent Literature 1).
- A paint composition containing a copolymer containing a structural unit based on a silicon-containing polymerizable monomer and a structural unit based on a metal atom-containing polymerizable monomer containing a divalent metal atom (Patent Literature 2).

### Citation List

#### Patent Literature

Patent Literature 1: JP 2002-012630 A
Patent Literature 2: JP 2004-300410 A

### Summary of Invention

#### Technical Problem

For the paint composition described in Patent Literature 1, a paint film formed with a paint composition containing no antifouling agent may have failed to exhibit a sufficient antifouling effect.

For the paint composition described in Patent Literature 2, a paint film formed with the paint composition exhibits an excellent antifouling effect even when the paint composition contains no antifouling agent. However, when the paint composition contains an organic solvent together with the copolymer, the paint composition has problems of poor storage stability and a possible increase in its viscosity with time during storage.

The viscosity can be reduced by further addition of an organic solvent to the paint composition, but in that case, the volatile organic compound (VOC) content increases.

Meanwhile, a paint composition having antifouling properties is also required to have excellent transparency from the viewpoint of appearance.

An object of the present invention is to provide a resin composition that can form a paint film exhibiting excellent transparency and antifouling effect and is unlikely to increase in its viscosity during storage, thereby exhibiting excellent storage stability.

#### Solution to Problem

The present invention has the following aspects.

[1] A resin composition containing:
a (meth)acrylic copolymer containing:

a structural unit (A) based on a metal atom-containing polymerizable monomer (a) containing a structure represented by Formula (1) or (2) below and an ethylenically unsaturated bond; and
a structural unit (B) based on at least one polysiloxane block-containing polymerizable monomer (b) selected from the group consisting of a polymerizable monomer represented by Formula (b1) below, a polymerizable monomer represented by Formula (b2) below, a polymerizable monomer represented by Formula (b3) below, and a polymerizable monomer represented by Formula (b4) below; and
an organic solvent, in which
a content of the structural unit (A) is from 5 to 35 mass%, a content of the structural unit (B) is from 35 to 75 mass%, and a content of the structural unit based on a (meth)acrylic macromonomer is less than 13 mass% relative to a total mass of all structural units constituting the (meth)acrylic copolymer,
a weight-average molecular weight of the (meth)acrylic copolymer is 2000 or more and 6500 or less, and
a VOC content is 500 g/L or less:

$$-CO-O-M-O-CO- \quad (1)$$

$$-CO-O-M-R^0 \quad (2)$$

$$CH_2=CR^{3a}-CO-O-(C_uH_{2u}-O)_v-C_wH_{2w}-(SiR^{3b}R^{3c}-O)_x-SiR^{3d}R^{3e}R^{3f} \quad (b1)$$

$$CH_2=CR^{4a}-CO-O-(C_{u'}H_{2u'}-O)_{v'}-C_{w'}H_{2w'}-Si(OSiR^{4b}R^{4c}R^{4d})_3 \quad (b2)$$

$$CH_2=CR^{2a}-CO-O-(C_{k'}H_{2k'}-O)_{l'}-C_{m'}H_{2m'}-Si((OSiR^{2b}R^{2c})_{r'}-OSiR^{2d}R^{2e}R^{2f})_2-OSi((O-SiR^{2g}R^{2h})_s-OSiR^{2i}R^{2j}R^{2k})_2-C_{o'}H_{2o'}-(O-C_{p'}H_{2p'})_{q'}-O-CO-CR^{21}=CH_2 \quad (b3)$$

$$CH_2=CR^{1a}-CO-O-(C_kH_{2k}-O)_l-C_mH_{2m}-(SiR^{1b}R^{1c}-O)_n-SiR^{1d}R^{1e}-C_oH_{2o}-(O-C_pH_{2p})_q-O-CO-CR^{1f}=CH_2 \quad (b4)$$

where M represents Zn, Cu, Mg, or Ca, and $R^0$ represents a monovalent organic acid residue,
$R^{3a}$ represents a hydrogen atom or a methyl group, u represents an integer from 2 to 5, v represents a number from 0 to 50, w represents an integer from 2 to 5, x represents a number from 3 to 80, and $R^{3b}$ to $R^{3f}$ each independently represent an alkyl group, an alkoxy group, a phenyl group, a substituted phenyl group, a phenoxy group, or a substituted phenoxy group,
$R^{4a}$ represents a hydrogen atom or a methyl group, u' represents an integer from 2 to 5, v' represents a number from 0 to 50, w' represents an integer from 2 to 5, and $R^{4b}$ to $R^{4d}$ each independently represent an alkyl group, $-(OSiR^{51}R^{52})_y-OSiR^{53}R^{54}R^{55}$, where y represents an integer from 0 to 20, and $R^{51}$ to $R^{55}$ represent an alkyl group, or $-R^{56}-(OC_2H_4)y'-OR^{57}$, where y' represents an integer from 1 to 20, $R^{56}$ represents an alkylene group, and $R^{57}$ represents an alkyl group,
$R^{2a}$ and $R^{2l}$ each independently represent a hydrogen atom or a methyl group, k' and p' each independently represent an integer from 2 to 5, 1' and q' each independently represent a number from 0 to 50, m' and o' each independently represent an integer from 2 to 5, r and s each independently represent a number from 0 to 20, and $R^{2b}$ to $R^{2k}$ each independently represent an alkyl group, and
$R^{1a}$ and $R^{1f}$ each independently represent a hydrogen atom or a methyl group, k and p each independently represent an integer from 2 to 5, 1 and q each independently represent a number from 0 to 50, m and o each independently represent an integer from 2 to 5, n represents a number from 3 to 80, and $R^{1b}$ to $R^{1e}$ each independently represent an alkyl group, an alkoxy group, a phenyl group, a substituted phenyl group, a phenoxy group, or a substituted phenoxy group.

[2] The resin composition according to [1] above, in which a content of the (meth)acrylic copolymer is from 10 to 65 mass% relative to a total mass of the resin composition.
[3] A resin composition containing:
a (meth)acrylic copolymer containing:

a structural unit (A) based on a metal atom-containing polymerizable monomer (a) containing a structure represented by Formula (1) or (2) below and an ethylenically unsaturated bond; and
a structural unit (B) based on at least one polysiloxane block-containing polymerizable monomer (b) selected from the group consisting of a polymerizable monomer represented by Formula (b1) below, a polymerizable monomer represented by Formula (b2) below, a polymerizable monomer represented by Formula (b3) below, and a polymerizable monomer represented by Formula (b4) below; and

an organic solvent, in which
a content of the structural unit (A) is from 5 to 35 mass%, a content of the structural unit (B) is from 35 to 75 mass%, and a content of the structural unit based on a (meth)acrylic macromonomer is less than 13 mass% relative to a total mass of all structural units constituting the (meth)acrylic copolymer,
a weight-average molecular weight of the (meth)acrylic copolymer is 2000 or more and 6500 or less,
a content of the organic solvent is 50 mass% or less relative to a total mass of the resin composition, and
a viscosity measured by a Gardner bubble viscometer at 25°C and a solid content concentration of 50 mass% is Z or less:

-CO-O-M-O-CO- (1)

$-CO-O-M-R^0$ (2)

$CH_2=CR^{3a}-CO-O-(C_uH_{2u}-O)_v-C_wH_{2w}-(SiR^{3b}R^{3c}-O)_x-SiR^{3d}R^{3e}R^{3f}$ (b1)

$CH_2=CR^{4a}-CO-O-(C_{u'}H_{2u'}-O)_{v'}-C_{w'}H_{2w'}-Si(OSiR^{4b}R^{4c}R^{4d})_3$ (b2)

$CH_2=CR^{2a}-CO-O-(C_{k'}H_{2k'}-O)_{l'}-C_{m'}H_{2m'}-Si((OSiR^{2b}R^{2c})_rOSiR^{2d}R^{2e}R^{2f})_2-OSi((O-SiR^{2g}R^{2h})_s-OSiR^{2i}R^{2j}R^{2k})_2-C_{o'}H2o'-(O-C_{p'}H_{2p'})q'-O-CO-CR^{2l}=CH_2$ (b3)

$CH_2=CR^{1a}-CO-O-(C_kH_{2k}-O)_l-C_mH_{2m}-(SiR^{1b}R^{1c}-O)_n-SiR^{1d}R^{ie}-C_oH_{2o}-(O-C_pH_{2p})_q-O-CO-CR^{1f}=CH_2$ (b4)

where M represents Zn, Cu, Mg, or Ca, and $R^0$ represents a monovalent organic acid residue,
$R^{3a}$ represents a hydrogen atom or a methyl group, u represents an integer from 2 to 5, v represents a number from 0 to 50, w represents an integer from 2 to 5, x represents a number from 3 to 80, and $R^{3b}$ to $R^{3f}$ each independently represent an alkyl group, an alkoxy group, a phenyl group, a substituted phenyl group, a phenoxy group, or a substituted phenoxy group,
$R^{4a}$ represents a hydrogen atom or a methyl group, u' represents an integer from 2 to 5, v' represents a number from 0 to 50, w' represents an integer from 2 to 5, and $R^{4b}$ to $R^{4d}$ each independently represent an alkyl group, $-(OSiR^{51}R^{52})_y-OSiR^{53}R^{54}R^{55}$, where y represents an integer from 0 to 20, and $R^{51}$ to $R^{55}$ represent an alkyl group, or $-R^{56}-(OC_2H_4)y'-OR^{57}$, where y' represents an integer from 1 to 20, $R^{56}$ represents an alkylene group, and $R^{57}$ represents an alkyl group,
$R^{2a}$ and $R^{2l}$ each independently represent a hydrogen atom or a methyl group, k' and p' each independently represent an integer from 2 to 5, 1' and q' each independently represent a number from 0 to 50, m' and o' each independently represent an integer from 2 to 5, r and s each independently represent a number from 0 to 20, and $R^{2b}$ to $R^{2k}$ each independently represent an alkyl group, and
$R^{1a}$ and $R^{1f}$ each independently represent a hydrogen atom or a methyl group, k and p each independently represent an integer from 2 to 5, 1 and q each independently represent a number from 0 to 50, m and o each independently represent an integer from 2 to 5, n represents a number from 3 to 80, and $R^{1b}$ to $R^{1e}$ each independently represent an alkyl group, an alkoxy group, a phenyl group, a substituted phenyl group, a phenoxy group, or a substituted phenoxy group.

Advantageous Effects of Invention

According to the present invention, there can be provided a resin composition that can form a paint film exhibiting excellent transparency and antifouling effect and is unlikely to increase in its viscosity during storage, exhibiting excellent storage stability.

Description of Embodiments

Embodiments of the present invention will be specifically described below, but the present invention is not limited to the following embodiments and can be carried out with various modifications within the scope of the gist of the present invention.
In the present specification and claims, a numerical range represented by "to" means a numerical range including the numerical value before the "to" as the lower limit value and after the "to" as the upper limit value. For example, "from A to B" is synonymous with "A or more and B or less".
The following definitions of terms apply throughout the present specification and claims.

"(Meth)acrylic copolymer" means a copolymer in which at least a part of the structural units is a structural unit derived from a (meth)acrylic monomer. The (meth)acrylic copolymer may further have a structural unit derived from a monomer (e.g., a vinyl monomer, such as styrene) besides the (meth)acrylic monomer.
"Structural unit" means a structural unit derived from a monomer formed by polymerization of the monomer, or a structural unit in which a part of the structural units is converted into another structure by treatment of a polymer.
"Monomer" means a compound having polymerizability (polymerizable monomer). "(Meth)acrylic monomer" means a monomer having a (meth)acryloyl group.
"(Meth)acryloyl group" is a generic term for an acryloyl group and a methacryloyl group. "(Meth)acrylate" is a generic term for acrylate and methacrylate. "(Meth)acrylic acid" is a generic term for acrylic acid and methacrylic acid. "(Meth)acrylonitrile" is a generic term for acrylonitrile and methacrylonitrile. "(Meth)acrylamide" is a generic term for acrylamide and methacrylamide. "(Meth)acrylic macromonomer" is a generic term for an acrylic macromonomer and a methacrylic macromonomer and means a macromonomer containing a structural unit derived from a (meth)acrylic monomer.
"VOC" means an organic compound (volatile organic compound) that easily volatilizes at normal temperature and normal pressure. The normal temperature and normal pressure refer to from 10°C to 30°C and from 1000 Pa to 1050 Pa.

Resin Composition (1)

A resin composition according to one aspect of the present invention (hereinafter also described as "resin composition (1)") contains a specific (meth)acrylic copolymer (hereinafter also referred to as "copolymer (X)") and an organic solvent.
The copolymer (X) contained in the resin composition (1) may be one type or two or more types. The same also applies to the organic solvent.
The resin composition (1) may further contain an additional component besides the copolymer (X) and the organic solvent as necessary.

Copolymer (X)

The copolymer (X) contains a structural unit (A) based on a metal atom-containing polymerizable monomer (a) (hereinafter also referred to as "monomer (a)") and a structural unit (B) based on a polysiloxane block-containing polymerizable monomer (b) (hereinafter also referred to as "monomer (b)").
The copolymer (X) may further contain a structural unit (hereinafter also referred to as "structural unit (C)") based on a polymerizable monomer (hereinafter also referred to as "monomer (c)") besides the monomer (a) and the monomer (b) as necessary.

Structural Unit (A)

The monomer (a) contains a structure represented by Formula (1) or (2) below (hereinafter also referred to as "structure (I)") and an ethylenically unsaturated bond (polymerizable carbon-carbon double bond):

$$\text{-CO-O-M-O-CO-} \qquad (1)$$

$$\text{-CO-O-M-}R^0 \qquad (2)$$

where M represents Zn, Cu, Mg, or Ca, and $R^0$ represents a monovalent organic acid residue.
In Formulae (1) and (2), O or $R^0$ adjacent to M is ionically bonded to M.
The copolymer (X) has the structure (I) (a carboxylate structure ionically bonded to M), and thus a paint film containing the copolymer (X) exhibits self-polishing properties.
From the viewpoint of further improvement in the water resistance of the paint film, M is preferably Zn or Cu and more preferably Zn.
The organic acid residue of $R^0$ refers to the remaining portion of an organic acid from which one proton is removed (e.g., the remaining portion of a carboxy group of a carboxylic acid from which one proton is removed), and the organic acid residue ionically bonds to M instead of the proton.
The organic acid is preferably a carboxylic acid, and examples include monocarboxylic acids, such as monochloroacetic acid, monofluoroacetic acid, acetic acid, propionic acid, octylic acid, versatic acid, isostearic acid, palmitic acid, cresotic acid, α-naphthoic acid, β-naphthoic acid, benzoic acid, 2,4,5-trichlorophenoxyacetic acid, 2,4-dichlorophenoxyacetic acid, quinolinecarboxylic acid, nitrobenzoic acid, nitronaphthalenecarboxylic acid, pyruvic acid, naphthenic acid, abietic acid, hydrogenated abietic acid, and (meth)acrylic acid. Among these, the organic acid is more preferably versatic acid or (meth)acrylic acid.

$R^0$ is preferably an organic acid residue other than a (meth)acryloyloxy group in terms of storage stability.

The structural unit (A) has a structure in which an ethylenically unsaturated bond of the monomer (a) is cleaved into a single bond.

The structural unit (A) is preferably at least one selected from the group consisting of a structural unit (A1) represented by Formula (11) below and a structural unit (A2) represented by Formula (21) below.

[Chem. 1]

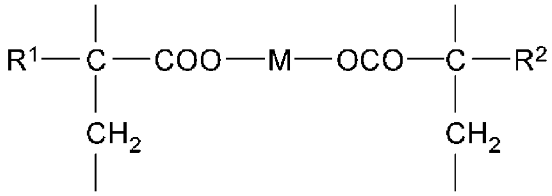

・・・ (11)

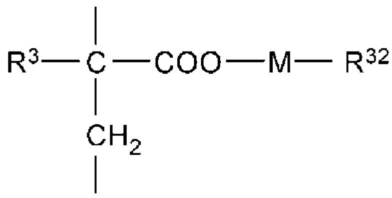

・・・ (21)

Here, M represents Zn, Cu, Mg, or Ca, $R^1$ to $R^3$ each independently represent a hydrogen atom or a methyl group, and $R^{32}$ represents a monovalent organic acid residue.

$R^{32}$ is the same as $R^0$.

Examples of the monomer forming the structural unit (A1) include a monomer (a1) represented by Formula (1) below.

Examples of the monomer forming the structural unit (A2) include a monomer (a2) represented by Formula (2) below.

$$CH_2=C(R^1)\text{-}CO\text{-}O\text{-}M\text{-}O\text{-}CO\text{-}C(R^2)=CH_2 \qquad (1)$$

$$CH_2=C(R^3)\text{-}CO\text{-}O\text{-}M\text{-}R^{32} \qquad (2)$$

M, $R^1$ to $R^3$, and $R^{32}$ are each as described above.

Specific examples of the monomer (a1) include the following:
Zinc acrylate [$(CH_2=CHCOO)_2Zn$], zinc methacrylate [$(CH_2=C(CH_3)COO)_2Zn$], copper acrylate [$(CH_2=CHCOO)_2Cu$], copper methacrylate [$(CH_2=C(CH_3)COO)_2Cu$], magnesium acrylate [$(CH_2=CHCOO)_2Mg$], magnesium methacrylate [$(CH_2=C(CH_3)COO)_2Mg$], calcium acrylate [$(CH_2=CHCOO)_2Ca$], and calcium methacrylate [$(CH_2=C(CH_3)COO)_2Ca$].

Among the above, from the viewpoint of the water resistance of the paint film containing the copolymer (X), the monomer (a1) is preferably zinc acrylate, zinc methacrylate, copper acrylate, or copper methacrylate.

Any one of these monomers may be used alone, or two or more may be used in combination.

The monomer (a1) is obtained, for example, by a method of reacting an inorganic metal compound containing a metal element corresponding to M in Formula (1) with (meth)acrylic acid in a diluting agent, such as an organic solvent, or in a reactive diluting agent having a polymerizable unsaturated group, such as an ethylenically unsaturated monomer. The mixture containing the metal-containing polymerizable monomer obtained by this method exhibits excellent compatibility with an organic solvent and any other monomer and can be easily polymerized. The reaction is preferably carried out in the presence of water, and the content of water in the reactants is preferably in the range of 0.01 to 30 mass%. Examples of the inorganic metal compound include oxides, hydroxides, and chlorides of a metal selected from Zn, Cu, Mg, and Ca.

Specific examples of the monomer (a2) include the following:
metal monochloroacetate (meth)acrylates, such as magnesium monochloroacetate (meth)acrylate, calcium monochloroacetate (meth)acrylate, zinc monochloroacetate (meth)acrylate, and copper monochloroacetate (meth)acrylate; metal monofluoroacetate (meth)acrylates, such as magnesium monofluoroacetate (meth)acrylate, calcium monofluoroacetate (meth)acrylate, zinc monofluoroacetate (meth)acrylate, and copper monofluoroacetate (meth)acrylate; metal acetate (meth)acrylates, such as magnesium acetate (meth)acrylate, calcium acetate (meth)acrylate, zinc acetate (meth)acrylate, and copper acetate (meth)acrylate; metal propionate (meth)acrylates, such as magnesium propionate (meth) acrylate, calcium propionate (meth)acrylate, zinc propionate (meth)acrylate, and copper propionate (meth)acrylate; metal octylate (meth)acrylates, such as magnesium octylate (meth)acrylate, calcium octylate (meth)acrylate, zinc octylate (meth)acrylate, and copper octylate (meth)acrylate; metal versatate (meth)acrylates, such as magnesium versatate (meth)acrylate, calcium versatate (meth)acrylate, zinc versatate (meth)acrylate, and copper versatate (meth)acrylate; metal isostearate (meth)acrylates, such as magnesium isostearate (meth)acrylate, calcium isostearate (meth)acrylate, zinc isostearate (meth)acrylate, and copper isostearate (meth)acrylate; metal palmitate (meth)acrylates, such as magnesium palmitate (meth)acrylate, calcium palmitate (meth)acrylate, zinc palmitate (meth)acrylate, and copper palmitate (meth)acrylate; metal cresotate (meth)acrylates, such as magnesium cresotate (meth)acrylate, calcium cresotate (meth)acrylate, zinc cresotate (meth)acrylate, and copper cresotate (meth)acrylate; metal α-naphthoate (meth)acrylates, such as magnesium α-naphthoate (meth)acrylate, calcium α-naphthoate (meth)acrylate, zinc α-naphthoate (meth)acrylate, and copper α-naphthoate (meth)acrylate; metal β-naphthoate (meth)acrylates, such as magnesium β-naphthoate (meth)acrylate, calcium β-naphthoate (meth)acrylate, zinc β-naphthoate (meth)acrylate, and copper β-naphthoate (meth)acrylate; metal benzoate (meth)acrylates, such as magnesium benzoate (meth)acrylate, calcium benzoate (meth)acrylate, zinc benzoate (meth)acrylate, and copper benzoate (meth)acrylate; metal 2,4,5-trichlorophenoxyacetate (meth)acrylates, such as magnesium 2,4,5-trichlorophenoxyacetate (meth)acrylate, calcium 2,4,5-trichlorophenoxyacetate (meth)acrylate, zinc 2,4,5-trichlorophenoxyacetate (meth)acrylate, and copper 2,4,5-trichlorophenoxyacetate (meth)acrylate; metal 2,4-dichlorophenoxyacetate (meth)acrylates, such as magnesium 2,4-dichlorophenoxyacetate (meth)acrylate, calcium 2,4-dichlorophenoxyacetate (meth)acrylate, zinc 2,4-dichlorophenoxyacetate (meth)acrylate, and copper 2,4-dichlorophenoxyacetate (meth)acrylate; metal quinolinecarboxylate (meth) acrylates, such as magnesium quinolinecarboxylate (meth)acrylate, calcium quinolinecarboxylate (meth)acrylate, zinc quinolinecarboxylate (meth)acrylate, and copper quinolinecarboxylate (meth)acrylate; metal nitrobenzoate (meth)acrylates, such as magnesium nitrobenzoate (meth)acrylate, calcium nitrobenzoate (meth)acrylate, zinc nitrobenzoate (meth) acrylate, and copper nitrobenzoate (meth)acrylate; metal nitronaphthalenecarboxylate (meth)acrylates, such as magnesium nitronaphthalenecarboxylate (meth)acrylate, calcium nitronaphthalenecarboxylate (meth)acrylate, zinc nitronaphthalenecarboxylate (meth)acrylate, and copper nitronaphthalenecarboxylate (meth)acrylate; and metal pyruvate (meth)acrylates, such as magnesium pyruvate (meth)acrylate, calcium pyruvate (meth)acrylate, zinc pyruvate (meth) acrylate, and copper pyruvate (meth)acrylate.

Among the above, from the viewpoint of the water resistance of the paint film containing the copolymer (X), the monomer (a2) is preferably a monomer in which M is Zn or Cu.

Any one of these monomers may be used alone, or two or more may be used in combination.

The monomer (a2) is obtained, for example, by a method of reacting an inorganic metal compound containing a metal element corresponding to M in Formula (2) with (meth)acrylic acid and an organic acid corresponding to the organic acid residue $R^{32}$ in Formula (2) in a diluting agent, such as an organic solvent, or in a reactive diluting agent having a polymerizable unsaturated group, such as an ethylenically unsaturated monomer. Examples of the inorganic metal compound include the same inorganic metal compounds as those for obtaining the monomer (a1).

The copolymer (X) can also contain the structural unit (A1) and the structural unit (A2). That is, the copolymer (X) can also contain a structural unit based on the monomer (a1) and a structural unit based on the monomer (a2).

In the copolymer (X) containing the structural unit (A1) and the structural unit (A2), the molar ratio of the structural unit (A1) to the structural unit (A2) in the copolymer (X), the structural unit (A1)/the structural unit (A2), is preferably from 10/90 to 90/10, more preferably from 20/80 to 80/20, and even more preferably from 30/70 to 70/30.

When the molar ratio is not more than the upper limit value, the viscosity of the resin composition containing the copolymer (X) and the organic solvent tends to decrease, while when the molar ratio is not less than the lower limit value, the self-polishing properties of the paint film containing the copolymer (X) tend to be maintained over a long period.

For the copolymer (X) containing a structural unit based on the monomer (a1) and a structural unit based on the monomer (a2), a monomer mixture containing the monomer (a1) and the monomer (a2) may be used for the production of the copolymer (X).

The monomer mixture containing the monomer (a1) and the monomer (a2) is obtained, for example, by a method of reacting an inorganic metal compound containing a metal element corresponding to M in Formulae (1) and (2) with (meth)acrylic acid and an organic acid corresponding to the organic acid residue $R^{32}$ in Formula (2) in a diluting agent, such as an organic solvent, or in a reactive diluting agent, such as an ethylenically unsaturated monomer.

In that case, the amount of the organic acid corresponding to $R^{32}$ used is preferably from 0.01 to 3 times, more preferably from 0.01 to 0.95 times, and even more preferably from 0.1 to 0.7 times the molar amount of the inorganic metal compound. When the content of this organic acid is 0.01 times or more the molar amount of the inorganic metal compound, precipitation of a solid in the production process of this monomer mixture is suppressed and the self-polishing properties and crack resistance of the resulting paint film are further improved. When the content of the organic acid is 3 times or less the molar amount of the inorganic metal compound, the antifouling properties of the resulting paint film tend to be maintained for a long period.

Structural Unit (B)

The monomer (b) is at least one selected from the group consisting of a polymerizable monomer represented by Formula (b1) below (hereinafter also referred to as "monomer (b1)"), a polymerizable monomer represented by Formula (b2) below (hereinafter also referred to as "monomer (b2)"), a polymerizable monomer represented by Formula (b3) below (hereinafter also referred to as "monomer (b3)"), and a polymerizable monomer represented by Formula (b4) below (hereinafter also referred to as "monomer (b4)").

The structural unit (B) has a structure in which an ethylenically unsaturated bond of the monomer (b) is cleaved into a single bond.

$$CH_2=CR^{3a}\text{-CO-O-}(C_uH_{2u}\text{-O})_v\text{-}C_wH_{2w}\text{-}(SiR^{3b}R^{3c}\text{-O})_x\text{-}SiR^{3d}R^{3e}R^{3f} \quad (b1)$$

$$CH_2=CR^{4a}\text{ -CO-O-}(C_{u'}H_{2u'}\text{-O})_{v'}\text{-}C_{w'}H_{2w'}\text{-}Si(OSiR^{4b}R^{4c}R^{4d})_3 \quad (b2)$$

$$CH_2=CR^{2a}\text{-CO-O-}(C_{k'}H_{2k'}\text{-O})_{l'}\text{-}C_{m'}H_{2m'}\text{-}Si((OSiR^{2b}R^{2c})_{r'}\text{-}OSiR^{2d}R^{2e}R^{2f})_2\text{-}OSi((OSiR^{2g}R^{2h})_s\text{-O-}SIR^{2i}R^{2j}R^{2k})_2\text{-}C_{o'}H_{2o'}\text{-}(O\text{-}C_{p'}H_{2p'})_{q'}\text{-O-CO-}CR^{2l}=CH_2 \quad (b3)$$

$$CH_2=CR^{la}\text{-CO-O-}(C_kH_{2k}\text{-O})_l\text{-}C_mH_{2m}\text{-}(SiR^{lb}R^{lc}\text{-O})_n\text{-}SiR^{1d}R^{le}\text{-}C_oH_2o\text{-}(O\text{-}C_pH_{2p})_q\text{-O-CO-}CR^{1f}=CH_2 \quad (b4)$$

Here, $R^{3a}$ represents a hydrogen atom or a methyl group, u represents an integer from 2 to 5, v represents a number from 0 to 50, w represents an integer from 2 to 5, x represents a number from 3 to 80, and $R^{3b}$ to $R^{3f}$ each independently represent an alkyl group, an alkoxy group, a phenyl group, a substituted phenyl group, a phenoxy group, or a substituted phenoxy group,

$R^{4a}$ represents a hydrogen atom or a methyl group, u' represents an integer from 2 to 5, v' represents a number from 0 to 50, w' represents an integer from 2 to 5, and $R^{4b}$ to $R^{4d}$ each independently represent an alkyl group, $-(OSiR^{51}R^{52})_y-OSiR^{53}R^{54}R^{55}$, where y represents an integer from 0 to 20, and $R^{51}$ to $R^{55}$ represent an alkyl group, or $-R^{56}-(OC_2H_4)y'-OR^{57}$, where y' represents an integer from 1 to 20, $R^{56}$ represents an alkylene group, and $R^{57}$ represents an alkyl group,

$R^{2a}$ and $R^{2l}$ each independently represent a hydrogen atom or a methyl group, k' and p' each independently represent an integer from 2 to 5, 1' and q' each independently represent a number from 0 to 50, m' and o' each independently represent an integer from 2 to 5, r and s each independently represent a number from 0 to 20, and $R^{2b}$ to $R^{2k}$ each independently represent an alkyl group, and

$R^{1a}$ and $R^{1f}$ each independently represent a hydrogen atom or a methyl group, k and p each independently represent an integer from 2 to 5, 1 and q each independently represent a number from 0 to 50, m and o each independently represent an integer from 2 to 5, n represents a number from 3 to 80, and $R^{1b}$ to $R^{1c}$ each independently represent an alkyl group, an alkoxy group, a phenyl group, a substituted phenyl group, a phenoxy group, or a substituted phenoxy group.

In Formula (b1), u represents an integer from 2 to 5 and is preferably 2 or 3 in terms of low cost. The monomer (b1) with u of 2 and the monomer (b1) with u of 3 may be used in combination.

v is an average degree of polymerization of the polyether structure and represents a number from 0 to 50. v of 50 or less tends to improve the water resistance of the paint film. In particular, v is preferably 30 or less because of excellent recoatability with an old paint film. v may be 0 but is preferably greater than 0 because of the tendency toward better recoatability with an old paint film. v is preferably greater than 0 and 30 or less, more preferably from 3 to 25, and even more preferably from 5 to 20.

w represents an integer from 2 to 5 and is preferably 2 or 3.

x is an average degree of polymerization of the polysiloxane structure and represents a number from 3 to 80. When x is not less than the lower limit value, the paint film readily exhibits an antifouling effect even in a case where the resin composition or paint composition containing the copolymer (X) contains no antifouling agent. When x is not more than the upper limit value, the monomer (b1) is compatible with the monomer (a) and the like and thus the resulting copolymer (X) has good solubility in organic solvents. X is preferably from 5 to 50 and more preferably from 8 to 40.

The alkyl group and the alkoxy group in $R^{3b}$ to $R^{3f}$ each preferably have from 1 to 18 carbons. Examples of the substituent in the substituted phenyl group and the substituted phenoxy group include an alkyl group and an alkoxy group.

$R^{3b}$ to $R^{3f}$ are each preferably an alkyl group with 1 to 18 carbons, more preferably a methyl group or an ethyl group, and particularly preferably a methyl group.

$R^{3a}$ to $R^{3f}$, u, v, w, and x are each independent, and when identical symbols are present in molecules or between molecules, they may be different.

Specific examples of the monomer (b1) with v of 0 include FM-0711, FM-0721, and FM-0725 (all the above are trade names) available from JNC Corporation, and X-24-8201, X-22-174DX, and X-22-2426 (all the above are trade

names) available from Shin-Etsu Chemical Co., Ltd. Examples of the monomer (b1) with v greater than 0 include F2-254-04 and F2-254-14 (trade names) available from Dow Corning Toray Co., Ltd.

One monomer (b1) may be used alone, or a plurality of those may be used in combination.

In Formula (b2), u’ is an integer from 2 to 5 and is preferably 2 or 3 in terms of low cost. The monomer (b2) with u’ of 2 and the monomer (b2) with u’ of 3 may be used in combination.

v’ is an average degree of polymerization of the polyether structure and represents a number from 0 to 50. When v’ is 50 or less, the water resistance of the paint film readily improves. In particular, v’ is preferably 30 or less because of excellent recoatability with an old paint film. v’ may be 0 but is preferably greater than 0 because of the tendency toward better recoatability with an old paint film. v’ is preferably greater than 0 and 30 or less, more preferably from 3 to 25, and even more preferably from 5 to 20.

w’ represents an integer from 2 to 5 and is preferably 2 or 3.

The alkyl group in $R^{4b}$ to $R^{4d}$ is preferably an alkyl group with 1 to 18 carbons, and examples include a methyl group, an ethyl group, an n-propyl group, and an n-butyl group. Among these, the alkyl group is preferably a methyl group or an ethyl group and particularly preferably a methyl group.

y is an average degree of polymerization of the polysiloxane structure and represents an integer from 0 to 20. y’ represents an average degree of polymerization of the polyether structure and represents an integer from 1 to 20. When y and y’ are not more than the upper limit values, the monomer (b2) is compatible with the monomer (a) and the like and the resulting copolymer (X) has good solubility in organic solvents. y and y’ are each preferably 10 or less and more preferably 5 or less.

Examples of the alkyl group in $R^{51}$ to $R^{55}$ and $R^{57}$ include the same alkyl groups as those in $R^{4b}$ to $R^{4d}$, and preferred aspects are also the same. In $R^{56}$, the alkylene group preferably has from 1 to 18 carbons.

$R^{4a}$ to $R^{4d}$, u’, v’, w’, y and y’ are each independent, and when identical symbols are present in molecules or between molecules, they may be different.

Specific examples of the monomer (b2) with v’ of 0 include TM-0701 (trade name) available from JNC Corporation, X-22-2404 (trade name) available from Shin-Etsu Chemical Co., Ltd., and F2-250-01 and F2-302-01 (all the above are trade names) available from Dow Corning Toray Co., Ltd. Examples of the monomer (b2) with v’ greater than 0 include F2-302-04 (trade name) available from Dow Corning Toray Co., Ltd.

One monomer (b2) may be used alone, or a plurality of those may be used in combination.

In Formula (b3), k’ and p’ represent an integer from 2 to 5 and are preferably 2 or 3 in terms of low cost. The monomers (b3) with k’ and p’ of 2 and 3 may be used in combination.

l’ and q’ are each an average degree of polymerization of the polyether structure and represent a number from 0 to 50. When l’ and q’ are 50 or less, the water resistance of the paint film readily improves. In particular, l’ and q’ are preferably 30 or less because of excellent recoatability with an old paint film. l’ and q’ may be 0 but are preferably greater than 0 because of the tendency toward better recoatability with an old paint film. l’ and q’ are preferably greater than 0 and 30 or less, more preferably from 3 to 25, and even more preferably from 5 to 20.

m’ and o’ represent an integer from 2 to 5 and are preferably 2 or 3.

r and s are each an average degree of polymerization of the polysiloxane structure and represent an integer from 0 to 20. When r and s are not more than the upper limit values, the monomer (b3) is compatible with the monomer (a) and the like and the resulting copolymer (X) has good solubility in organic solvents. r and s are preferably 10 or less and more preferably 5 or less.

The alkyl group in $R^{2b}$ to $R^{2k}$ is preferably an alkyl group with 1 to 18 carbons, and examples include a methyl group, an ethyl group, an n-propyl group, and an n-butyl group. Among these, the alkyl group is preferably a methyl group or an ethyl group and particularly preferably a methyl group.

$R^{2a}$ to $R^{2l}$, k’, 1’, m’, n’, o’, p’, q’, r, and s are each independent, and when identical symbols are present in molecules or between molecules, they may be different.

Specific examples of the monomer (b3) with l’ and q’ of 0 include F2-312-01 (trade name) available from Dow Corning Toray Co., Ltd. Examples of the monomer (b3) with l’ and q’ greater than 0 include F2-312-04 (trade name) available from Dow Corning Toray Co., Ltd.

One monomer (b3) may be used alone, or a plurality of those may be used in combination.

In Formula (b4), k and p represent an integer from 2 to 5 and are preferably 2 or 3 in terms of low cost. The monomers (b4) with k and/or p of 2 and/or 3 may be used in combination.

l and q are each an average degree of polymerization of the polyether structure and each represent a number from 0 to 50. When l and q are 50 or less, the water resistance of the paint film readily improves. In particular, l and q are preferably 30 or less because of excellent recoatability with an old paint film. l and q may be 0 but are preferably greater than 0 because of the tendency toward better recoatability with an old paint film. l and q are preferably greater than 0 and 30 or less, more preferably from 3 to 25, and even more preferably from 5 to 20.

m and o represent an integer from 2 to 5 and are preferably 2 or 3.

n is an average degree of polymerization of the polysiloxane structure and represents a number from 3 to 80.

When n is not less than the lower limit value, the paint film readily exhibits an antifouling effect even in a case where the resin composition or paint composition containing the copolymer (X) contains no antifouling agent. When n is not more than the upper limit value, the monomer (b4) is compatible with the monomer (a) and the like and thus the resulting copolymer (X) has good solubility in organic solvents. n is preferably from 5 to 50 and more preferably from 8 to 40.

The alkyl group and the alkoxy group in $R^{1b}$ to $R^{1e}$ each preferably have from 1 to 18 carbons. Examples of the substituent in the substituted phenyl group and the substituted phenoxy group include an alkyl group and an alkoxy group.

$R^{1b}$ to $R^{1c}$ are each preferably an alkyl group with 1 to 18 carbons, more preferably a methyl group or an ethyl group, and particularly preferably a methyl group.

$R^{1a}$ to $R^{1f}$, k, l, m, n, o, p, and q are each independent, and when identical symbols are present in molecules or between molecules, they may be different.

Specific examples of the monomer (b4) with l and q of 0 include FM-7711, FM-7721, and FM-7725 (all the above are trade names) available from JNC Corporation, and F2-311-02 (trade name) available from Dow Corning Toray Co., Ltd. Examples of the monomer (b4) with l and q greater than 0 include F2-354-04 (trade name) available from Dow Corning Toray Co., Ltd.

One monomer (b4) may be used alone, or a plurality of those may be used in combination.

In terms of the crack resistance of the paint film and the adhesion to the substrate, the structural unit (B) is preferably composed only of a structural unit based on the monomer (b1) or (b2), which is a monomer (b) containing an ethylenically unsaturated bond at one end.

In terms of recoatability, the structural unit (B) preferably contains a structural unit based on the monomer (b1) or (b2) and a structural unit based on the monomer (b3) or (b4).

When the structural unit (B) contains a structural unit based on the monomer (b1) or (b2) and a structural unit based on the monomer (b3) or (b4), the ratio (molar ratio) of the structural unit based on the monomer (b3) or (b4)/the structural unit based on the monomer (b1) or (b2) is preferably from 1/99 to 80/20 and more preferably from 3/97 to 60/40. When the ratio is 80/20 or less, a paint film with excellent crack resistance and adhesion to the substrate is readily formed. When the ratio is 1/99 or more, the long-term antifouling properties and recoatability of the paint film formed by the resin composition or paint composition containing the copolymer (X) further improve.

Structural Unit (C)

The monomer (c) is a polymerizable monomer other than the monomer (a) and the monomer (b).

The monomer (c) is any monomer copolymerizable with the monomer (a) and the monomer (b), and examples include compounds containing an ethylenically unsaturated bond (however, excluding the monomer (a) and the monomer (b)).

Specific examples of the monomer (c) include the following:

hydrophobic group-containing (meth)acrylic ester monomers, such as substituted or unsubstituted alkyl (meth) acrylates [e.g., methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, lauryl (meth)acrylate, stearyl (meth)acrylate, behenyl (meth)acrylate, 1-methyl-2-methoxyethyl (meth)acrylate, 3-methoxybutyl (meth) acrylate, and 3-methyl-3-methoxybutyl (meth)acrylate]; substituted or unsubstituted aralkyl (meth)acrylates [e.g., benzyl (meth)acrylate and m-methoxyphenylethyl (meth)acrylate, p-methoxyphenylethyl (meth)acrylate]; substituted or unsubstituted aryl (meth)acrylates [e.g., phenyl (meth)acrylate, m-methoxyphenyl (meth)acrylate, p-methoxyphenyl (meth)acrylate, and o-methoxyphenylethyl (meth)acrylate]; alicyclic (meth)acrylates [e.g., isobornyl (meth)acrylate and cyclohexyl (meth)acrylate]; trifluoroethyl (meth)acrylate, perfluorooctyl (meth)acrylate, and perfluorocyclohexyl (meth)acrylate;

oxyethylene group-containing (meth)acrylic ester monomers, such as 2-methoxyethyl (meth)acrylate, 2-ethoxyethyl (meth)acrylate, 2-butoxyethyl (meth)acrylate, butoxydiethylene glycol (meth)acrylate, methoxytriethylene glycol (meth)acrylate, methoxypolyethylene glycol (meth)acrylate, phenoxyethyl (meth)acrylate, and 2-(2-ethylhexaoxy) ethyl (meth)acrylate;

hydroxy group-containing (meth)acrylic ester monomers, such as 2-hydroxyethyl (meth)acrylate, 2-hydroxypropyl (meth)acrylate, 4-hydroxybutyl (meth)acrylate, and glycerol (meth)acrylate;

terminally alkoxy allylated polyether monomers, such as methoxypolyethylene glycol allyl ether, methoxypolypropylene glycol allyl ether, butoxypolyethylene glycol allyl ether, butoxypolypropylene glycol allyl ether, methoxypolyethylene glycol-polypropylene glycol allyl ether, and butoxypolyethylene glycol-polypropylene glycol allyl ether;

epoxy group-containing vinyl monomers, such as glycidyl (meth)acrylate, $\alpha$-ethylglycidyl acrylate, and 3,4-epoxybutyl (meth)acrylate;

primary or secondary amino group-containing vinyl monomers, such as butylaminoethyl (meth)acrylate and (meth) acrylamide;

tertiary amino group-containing vinyl monomers, such as dimethylaminoethyl (meth)acrylate, diethylaminoethyl (meth)acrylate, dimethylaminopropyl (meth)acrylate, dimethylaminobutyl (meth)acrylate, dibutylaminoethyl (meth) acrylate, dimethylaminoethyl (meth)acrylamide, and dimethylaminopropyl (meth)acrylamide;
heterocyclic basic monomers, such as vinylpyrrolidone, vinylpyridine, and vinylcarbazole;
organosilyl group-containing vinyl monomers, such as trimethylsilyl (meth)acrylate, triethylsilyl (meth)acrylate, tri-n-propylsilyl (meth)acrylate, tri-n-butylsilyl (meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)acrylate, tribenzylsilyl (meth)acrylate, triisopropylsilyl (meth)acrylate, triisobutylsilyl (meth)acrylate, tri-s-butylsilyl (meth)acrylate, tri-2-methylisopropylsilyl (meth)acrylate, tri-t-butylsilyl (meth)acrylate, ethyldimethylsilyl (meth)acrylate, n-butyldimethylsilyl (meth)acrylate, diisopropyl-n-butylsilyl (meth)acrylate, n-octyldi-n-butylsilyl (meth)acrylate, diisopropylstearylsilyl (meth)acrylate, dicyclohexylphenylsilyl (meth)acrylate, t-butyldiphenylsilyl (meth)acrylate, lauryldiphenylsilyl (meth)acrylate, triisopropylsilyl methyl malate, triisopropylsilyl amyl malate, tri-n-butylsilyl-n-butyl malate, t-butyldiphenylsilyl methyl malate, t-butyldiphenylsilyl-n-butyl malate, triisopropylsilyl methyl fumarate, triisopropylsilyl amyl fumarate, tri-n-butylsilyl-n-butyl fumarate, t-butyldiphenylsilyl methyl fumarate, and t-butyldiphenylsilyl-n-butyl fumarate;
acid anhydride group-containing vinyl monomers, such as maleic anhydride and itaconic anhydride;
carboxy group-containing ethylenically unsaturated monomers, such as methacrylic acid, acrylic acid, crotonic acid, vinylbenzoic acid, fumaric acid, itaconic acid, maleic acid, citraconic acid, monomethyl maleate, monoethyl maleate, monobutyl maleate, monooctyl maleate, monomethyl itaconate, monoethyl itaconate, monobutyl itaconate, monooctyl itaconate, monomethyl fumarate, monoethyl fumarate, monobutyl fumarate, monooctyl fumarate, monoethyl citraconate, tetrahydrophthalic acid mono-hydroxyethyl (meth)acrylate, tetrahydrophthalic acid mono-hydroxypropyl (meth)acrylate, tetrahydrophthalic acid monohydroxybutyl (meth)acrylate, phthalic acid monohydroxyethyl (meth) acrylate, phthalic acid monohydroxypropyl (meth)acrylate, succinic acid monohydroxyethyl (meth)acrylate, succinic acid monohydroxypropyl (meth)acrylate, maleic acid monohydroxyethyl (meth)acrylate, and maleic acid monohydroxypropyl (meth)acrylate;
unsaturated dicarboxylic acid diester monomers, such as dimethyl maleate, dibutyl maleate, dimethyl fumarate, dibutyl fumarate, dibutyl itaconate, and di-perfluorocyclohexyl fumarate;
cyano group-containing vinyl monomers, such as acrylonitrile and methacrylonitrile;
vinyl ether monomers, such as alkyl vinyl ethers [e.g., ethyl vinyl ether, propyl vinyl ether, butyl vinyl ether, hexyl vinyl ether, and 2-ethylhexyl vinyl ether]; and cycloalkyl vinyl ethers [e.g., cyclohexyl vinyl ether];
vinyl ester monomers, such as vinyl acetate, vinyl propionate, vinyl butyrate, and vinyl benzoate;
aromatic vinyl monomers, such as styrene, vinyltoluene, and $\alpha$-methylstyrene;
halogenated olefins, such as vinyl chloride, vinylidene chloride, vinyl fluoride, vinylidene fluoride, and chlorotrifluoroethylene;
polyfunctional monomers, such as ethylene glycol di(meth)acrylate, diethylene glycol di(meth)acrylate, triethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, 1,9-nonanediol di(meth)acrylate, 1,10-decanediol di(meth)acrylate, trimethylolpropane tri(meth)acrylate, pentaerythritol tetra(meth)acrylate, dipentaerythritol hexa(meth)acrylate, allyl methacrylate, triallyl cyanurate, diallyl maleate, and polypropylene glycol diallyl ether; and macromonomers.

Examples of the macromonomer include a compound having an ethylenically unsaturated bond-containing group and having two or more structural units derived from a monomer having an ethylenically unsaturated bond-containing group. The two or more structural units present in the macromonomer may be the same as or different from each other.
Examples of the ethylenically unsaturated bond-containing group include $CH_2=C(COOR)-CH_2-$, a (meth) acryloyl group, a 2-(hydroxymethyl)acryloyl group, and a vinyl group, where R represents a hydrogen atom, an unsubstituted or substituted alkyl group, an unsubstituted or substituted alicyclic group, an unsubstituted or substituted aryl group, or an unsubstituted or substituted heterocyclic group. Examples of the substituent include at least one selected from the group consisting of an alkyl group (excluding a case where R is a substituted alkyl group), an aryl group, $-COOR^{61}$, a cyano group, $-OR^{62}$, $-NR^{63}R^{64}$, $-CONR^{65}R^{66}$, a halogen atom, an allyl group, an epoxy group, a siloxy group, and a group exhibiting hydrophilicity or ionicity, where $R^{61}$ to $R^{66}$ each independently represent a hydrogen atom, an alkyl group, an alicyclic group, or an aryl group.
As the monomer having an ethylenically unsaturated bond-containing group, for example, any of the various monomers described above as examples of the monomer (c) can be used (however, excluding macromonomers).
Specific examples of the macromonomer include those disclosed in WO 2013/108880.
One or two or more of these monomers (c) can be appropriately selected and used as necessary.
From the viewpoint of facilitating the low viscosity when the copolymer (X) is dissolved in an organic solvent even at a high solid content, the monomer (c) is preferably a monofunctional monomer having one ethylenically unsaturated

bond, and the ethylenically unsaturated bond is particularly preferably derived from an acryloyl group. That is, the monomer (c) is particularly preferably a monofunctional monomer having one acryloyl group.

In terms of providing the paint film formed by the resin composition or paint composition containing the copolymer (X) with the flexibility, crack resistance, or peeling resistance, and long-term self-polishing properties in a balanced manner, the structural unit (C) preferably contains a structural unit based on a hydrophobic group-containing (meth)acrylic ester monomer.

The hydrophobic group-containing (meth)acrylic ester monomer is preferably an alkyl (meth)acrylate.

In terms of the solubility and crack resistance of the paint film formed by the resin composition or paint composition containing the copolymer (X), the structural unit (C) preferably contains a structural unit based on an oxyethylene group-containing (meth)acrylic ester monomer.

The oxyethylene group-containing (meth)acrylic ester monomer is preferably a compound represented by Formula (3-1) below (hereinafter also referred to as "monomer (c1)"). $Z^1$-($CH_2CH_2O$)t$R^{21}$ (3-1)

where $Z^1$ represents an acryloyloxy group or a methacryloyloxy group, $R^{21}$ represents a hydrogen atom, an alkyl group with 1 to 10 carbons, or an aryl group, and t represents an integer from 1 to 15.

In Formula (3-1), the hydrolysis rate of the monomer (c1) tends to be higher in a case where $Z^1$ is an acryloyloxy group compared to a case where $Z^1$ is a methacryloyloxy group. $Z^1$ can be freely selected according to the dissolution rate of the paint film formed by the resin composition or paint composition containing the copolymer (X).

Examples of the alkyl group with 1 to 10 carbons in $R^{21}$ include a methyl group, an ethyl group, a propyl group, an isopropyl group, a butyl group, an isobutyl group, a pentyl group, a hexyl group, and a 2-ethylhexyl group. The alkyl group preferably has from 1 to 4 carbons, more preferably from 1 to 3 carbons, and even more preferably 1 or 2 carbons. The aryl group is preferably an aryl group with 6 to 20 carbons, and examples include a phenyl group and a naphthyl group.

From the viewpoint of water resistance and crack resistance, t is preferably an integer from 1 to 10, more preferably an integer from 1 to 5, even more preferably an integer from 1 to 3, and particularly preferably 1 or 2.

Content of Each Structural Unit

The content of the structural unit (A) is from 5 to 35 mass%, preferably from 10 to 30 mass%, and more preferably from 15 to 25 mass% relative to the total mass (100 mass%) of all structural units constituting the copolymer (X). When the content of the structural unit (A) is not less than the lower limit value, the paint film formed by the resin composition or paint composition containing the copolymer (X) exhibits even better self-polishing properties. When the content of the structural unit (A) is not more than the upper limit value, the paint film formed by the resin composition or paint composition containing the copolymer (X) exhibits excellent crack resistance, maintains the self-polishing properties over a long period, and exhibits even better antifouling effect.

The content of the structural unit (B) is from 35 to 75 mass%, preferably from 35 to 70 mass%, and more preferably from 35 to 65 mass% relative to the total mass of all structural units constituting the copolymer (X). When the content of the structural unit (B) is not less than the lower limit value, the paint film formed by the resin composition or paint composition containing the copolymer (X) exhibits excellent antifouling properties even in a case where an antifouling agent is not used in the resin composition or paint composition containing the copolymer (X). When the content of the structural unit (B) is not more than the upper limit value, the paint film formed by the resin composition or paint composition containing the copolymer (X) exhibits excellent crack resistance, maintains the self-polishing properties over a long period, and exhibits even better antifouling effect.

The total content of the structural unit based on the monomer (b3) and the structural unit based on the monomer (b4) in the structural unit (B) is preferably 15 mass% or less, more preferably 10 mass% or less, and even more preferably 5 mass% or less relative to the total mass of all structural units constituting the copolymer (X). When the total content of the structural unit based on the monomer (b3) and the structural unit based on the monomer (b4) is not more than the upper limit value, the copolymer (X) is readily produced without gelation due to crosslinking during production of the copolymer (X). In addition, the viscosity of the solution of the copolymer (X) tends to decrease.

The total content of the structural unit (A) and the structural unit (B) is preferably from 40 to 90 mass%, more preferably from 45 to 85 mass%, and even more preferably from 50 to 80 mass% relative to the total mass of all structural units constituting the copolymer (X).

The content of the structural unit (C) is preferably from 10 to 60 mass%, more preferably from 15 to 55 mass%, and even more preferably from 20 to 50 mass% relative to the total mass of all structural units constituting the copolymer (X).

In a case where the structural unit (C) contains a structural unit based on an oxyethylene group-containing (meth) acrylic ester monomer, the content of this structural unit is preferably from 1 to 60 mass%, more preferably from 5 to 55 mass%, and even more preferably from 10 to 50 mass% relative to the total mass of all structural units constituting the copolymer (X). When the content of this structural unit is not less than the lower limit value, the paint film formed by the resin composition or paint composition containing the copolymer (X) has higher hydrophilicity and even better self-polishing

properties. When the content of this structural unit is not more than the upper limit value, the paint film formed by the resin composition or paint composition containing the copolymer (X) has moderate hydrolyzability, maintains the self-polishing properties over a long period, and exhibits even better antifouling effect.

In a case where the structural unit (C) contains a structural unit based on a monomer (c) other than the oxyethylene group-containing (meth)acrylic ester monomer, such as a hydrophobic group-containing (meth)acrylic ester monomer, the content of this structural unit is preferably from 1 to 60 mass% and more preferably from 5 to 55 mass% relative to the total mass of all structural units constituting the copolymer (X). When the content of this structural unit is within the range above, the paint film formed by the resin composition or paint composition containing the copolymer (X) has higher flexibility, crack resistance, and peel resistance, and exhibits even better antifouling effect. In addition, when the content of this structural unit is not more than the upper limit value, the paint film formed by the resin composition or paint composition containing the copolymer (X) has appropriate hydrolyzability, maintains the self-polishing properties over a long period and exhibits even better antifouling effect.

In a case where the structural unit (C) contains a structural unit based on a (meth)acrylic macromonomer, the content of this structural unit is less than 13 mass%, preferably 10 mass% or less, more preferably 8 mass% or less, and even more preferably 4 mass% or less relative to the total mass of all structural units constituting the copolymer (X). In addition, the copolymer (X) still more preferably contains no structural unit based on a monomer (c) selected from macromonomers. When the content of the structural unit based on a (meth)acrylic macromonomer is not more than the upper limit value, the paint film formed by the resin composition or paint composition containing the copolymer (X) has good transparency.

The total of the structural unit (A), the structural unit (B), and the structural unit (C) is 100 mass%.

The content (mass%) of each structural unit in the copolymer can be measured by a known method, such as gas chromatography, high-performance liquid chromatography, or nuclear magnetic resonance spectroscopy.

At least a part of the structural units constituting the copolymer (X) is a structural unit based on a (meth)acrylic monomer.

The content of the structural unit based on a (meth)acrylic monomer is preferably from 20 to 100 mass% and more preferably from 40 to 100 mass% relative to the total mass of all structural units constituting the copolymer (X).

The monomers (b1) to (b4) described above are all (meth)acrylic monomers, and the structural unit (B) is a structural unit based on a (meth)acrylic monomer.

Both the monomers (a1) and (a2) described above are (meth)acrylic monomers, and when the structural unit (A) is a structural unit based on the monomer (a1) or (a2), the structural unit (A) is also a structural unit based on a (meth)acrylic monomer.

In a case where the copolymer (X) contains the structural unit (C), the structural unit (C) may or may not contain a structural unit based on a (meth)acrylic monomer.

The copolymer (X) is preferably a copolymer obtained by polymerization of a monomer mixture containing the monomer (a) and the monomer (b). Such a copolymer tends to exhibit even better water resistance than a copolymer produced by polymerizing a monomer mixture containing a monomer (a0) having an ethylenically unsaturated bond and a carboxy group and the monomer (b) into a copolymer (X0) having a carboxy group and converting the carboxy group of the resulting copolymer (X0) into the structure (1).

Typically, the content of the monomer (a) is from 5 to 35 mass% and the content of the monomer (b) is from 35 to 75 mass% relative to 100 mass% of the monomer mixture. The monomer mixture is preferably composed of 5 to 35 mass% of the monomer (a), 35 to 75 mass% of the monomer (b), and 10 to 60 mass% of the monomer (c) relative to a total mass of 100 mass%, and more preferably composed of 10 to 30 mass% of the monomer (a), 35 to 70 mass% of the monomer (b), and 10 to 55 mass% of the monomer (c).

In addition, in a case where the monomer (c) contains a (meth)acrylic macromonomer, the content of the (meth) acrylic macromonomer is typically less than 13 mass%, preferably 10 mass% or less, more preferably 8 mass% or less, and even more preferably 4 mass% or less relative to a total mass of 100 mass% of the monomer mixture.

The content of each monomer is a proportion to the total amount of the monomer mixture. The more preferred content range of each monomer is the same as the preferred content range of the structural unit based on each monomer.

That is, the structural units constituting the copolymer (X) are typically such that the content of the structural unit (A) is from 5 to 35 mass% and the content of the structural unit (B) is from 35 to 75 mass% relative to a total mass of 100 mass% of all structural units constituting the copolymer (X). The structural units constituting the copolymer (X) are preferably composed of 5 to 35 mass% of the structural unit (A), 35 to 75 mass% of the structural unit (B), and 10 to 60 mass% of the structural unit (C), and more preferably composed of 10 to 30 mass% of the structural unit (A), 35 to 70 mass% of the structural unit (B), and 10 to 55 mass% of the structural unit (C) relative to a total mass of 100 mass% of all structural units constituting the copolymer (X).

The weight-average molecular weight of the copolymer (X) is 2000 or more and 6500 or less, preferably 2000 or more and 5000 or less, more preferably 2500 or more and 4500 or less, and even more preferably 3000 or more and 4000 or less.

When the weight-average molecular weight of the copolymer (X) is not more than the upper limit value, the resin composition containing the copolymer (X) and the organic solvent exhibits excellent storage stability and is unlikely to increase in viscosity with time during storage. Thus, a paint composition with a high solid content (low VOC) and a low viscosity is easily obtained. When the weight-average molecular weight is not less than the lower limit value, the paint film formed by the resin composition or paint composition containing the copolymer (X) exhibits even better durability, and exhibits excellent long-term antifouling properties.

The number-average molecular weight (Mn) of the copolymer (X) is preferably from 1000 to 2500 and more preferably from 1500 to 2000.

The polydispersity (Mw/Mn) of the copolymer (X) is preferably from 1.5 to 5.0 and more preferably from 2.2 to 3.0.

The weight-average molecular weight and number-average molecular weight of the copolymer (X) are each measured by gel permeation chromatography (GPC) using polystyrene as a reference resin.

Method for Producing Copolymer (X)

Examples of the method for producing the copolymer (X) include the following production methods (α) and (β).

Production method (α): a method of polymerizing a monomer mixture containing the monomer (a) and the monomer (b).

Production method (β): a method of polymerizing a monomer mixture containing the monomer (a0) having an ethylenically unsaturated bond and a carboxy group and the monomer (b) to produce the copolymer (X0) having a carboxy group, and converting the carboxy group of this copolymer (X0) into the structure (I).

Production Method (α):

In the production method (α), a monomer mixture containing the monomer (a) and the monomer (b) (hereinafter also referred to as "monomer mixture (α1)") is polymerized.

The monomer mixture (α1) may further contain the monomer (c).

The composition of the monomer mixture (α1), that is, the types of monomers constituting the monomer mixture (α1) and the content (mass%) of each monomer relative to the total mass of all monomers, is the same as the composition of the copolymer (X), that is, the types of monomers forming each structural unit constituting the copolymer (X) and the content (mass%) of each structural unit relative to the total mass of all structural units.

A known polymerization method can be applied as the polymerization method of the monomer mixture (α1), such as a solution polymerization method, a suspension polymerization method, a bulk polymerization method, or an emulsion polymerization method. In terms of productivity and paint film performance, a solution polymerization method is preferred.

The polymerization is carried out by a known method using a known polymerization initiator. Examples include a method of reacting the monomer mixture (α1) in the presence of a radical initiator at a reaction temperature of 60 to 120°C for 4 to 14 hours. In the polymerization, a chain transfer agent may be used as necessary.

A known radical initiator can be used as the radical initiator, and examples include 2,2-azobisisobutyronitrile, 2,2-azobis(2,4-dimethylvaleronitrile), 2,2-azobis(2-methylbutyronitrile), benzoyl peroxide, cumene hydroperoxide, lauryl peroxide, di-t-butyl peroxide, and t-butyl peroxy-2-ethylhexanoate.

The content of the polymerization initiator is not particularly limited and can be appropriately set. Typically, the content of the polymerization initiator is approximately from 0.1 to 20 parts by mass relative to 100 parts by mass of the polymerizable monomer.

A known agent can be used as the chain transfer agent, and examples include mercaptans, such as n-dodecyl mercaptan; thioglycolic esters, such as octyl thioglycolate; α-methylstyrene dimer; and terpinolene.

The content of the chain transfer agent is not particularly limited and can be appropriately set. Typically, the content of the chain transfer agent is approximately from 0.0001 to 10 parts by mass relative to 100 parts by mass of the polymerizable monomer.

A common organic solvent can be used as the solvent used in the solution polymerization, such as toluene, xylene, methyl isobutyl ketone, or n-butyl acetate.

Production Method (β):

In the production method (β), a monomer mixture containing the monomer (a0) and the monomer (b) (hereinafter also referred to as "monomer mixture (β1)") is polymerized to produce the copolymer (X0) having a carboxy group, and the carboxy group of this copolymer (X0) is converted into the structure (I).

The monomer mixture (β1) may further contain the monomer (c).

The composition of the monomer mixture (β1) is the same as the composition of the monomer mixture (α1) except that the monomer (a) is the monomer (a0).

Examples of the monomer (a0) include (meth)acrylic acid, crotonic acid, isocrotonic acid, maleic acid, fumaric acid, itaconic acid, monomethyl maleate, and monomethylfumarate.

The polymerization of the monomer mixture (β1) can be carried out in the same manner as the polymerization of the monomer mixture (α1) in the production method (α).

Examples of the method for converting the carboxy group of the copolymer (X0) into the structure represented by Formula (1) include a method of reacting the copolymer (X0) with a metal oxide, such as zinc oxide.

Examples of the method for converting the carboxy group of the copolymer (X0) into the structure represented by Formula (2) include a method of reacting the copolymer (X0), an organic acid corresponding to the organic acid residue $R^{32}$ in Formula (21) above, and a metal oxide, such as zinc oxide.

The metal of the metal oxide corresponds to the M above.

The reaction of the copolymer (X0) with the metal oxide or the reaction of the copolymer (X0) with the organic acid and the metal oxide can be carried out, for example, by raising the temperature to the reflux temperature and then continuing the reaction for 10 to 20 hours while a distilled mixture of the organic acid, water, and the organic solvent is removed and the same amount of the organic solvent is replenished.

Organic Solvent

The resin composition (1) contains the organic solvent, improving the paint suitability of the paint composition containing the resin composition (1), the water resistance and film formability of the paint film, and the like.

The organic solvent is not particularly limited, and a common organic solvent can be used. Examples include hydrocarbon-based solvents, such as toluene and xylene; ether-based solvents, such as propylene glycol monomethyl ether-2-acetate; ketone-based solvents, such as methyl isobutyl ketone; and ester-based solvents, such as n-butyl acetate. Any one of these can be used alone, or two or more can be used in combination.

Additional Component

An additional component, such as those exemplified for the paint composition described later, can be used as an additional component. However, the additional component is not limited to these and can be appropriately selected from various known additives according to the application of the resin composition (1).

Examples of the applications of the resin composition (1) include paint compositions.

In the resin composition (1), the content of the copolymer (X) is preferably 45 mass% or more, more preferably 50 mass% or more, even more preferably 55 mass% or more, particularly preferably 60 mass% or more, and most preferably 64 mass% or more relative to the total mass of the resin composition (1). When the content of the copolymer (X) is not less than the lower limit value, the paint composition with a small VOC content can be easily obtained.

The content of the copolymer (X) is preferably an amount such that the viscosity of the resin composition (1), as measured by a Gardner bubble viscometer at 25°C, is not more than the preferred upper limit value described later, and is preferably 80 mass% or less and more preferably 85 mass% or less, although this also varies depending on the weight-average molecular weight, glass transition temperature, presence or absence of a crosslinked structure, and the like of the copolymer (X).

In the resin composition (1), the content of the organic solvent is 50 mass% or less, preferably 45 mass% or less, and more preferably 40 mass% or less relative to the total mass of the resin composition (1). When the content of the organic solvent is not more than the upper limit value, the paint composition with a small VOC content can be easily produced.

The content of the organic solvent is preferably an amount such that the viscosity of the resin composition (1), as measured by a Gardner bubble viscometer at 25°C, is not more than the preferred upper limit value described later. The content of the organic solvent is preferably 15 mass% or more and more preferably 20 mass% or more relative to the total mass of the resin composition (1) although this also varies depending on the weight-average molecular weight, glass transition temperature, presence or absence of a crosslinked structure, and the like of the copolymer (X).

The solid content (residue on heating) of the resin composition (1) is preferably 50 mass% or more, more preferably 55 mass% or more, and even more preferably 60 mass% or more relative to the total mass of the resin composition (1). When the solid content is not less than the lower limit value, the paint composition with a small VOC content can be easily produced.

From the viewpoint of the viscosity of the resin composition (1), the solid content of the resin composition (1) is preferably 85 mass% or less and more preferably 80 mass% or less relative to the total mass of the resin composition (1).

The solid content is measured by the method described in Examples below.

When the solid content concentration of the resin composition (1) is 50 mass%, the viscosity of the resin composition (1) measured by a Gardner bubble viscometer at 25°C (hereinafter also referred to as "Gardner viscosity") is Z or less, preferably W or less, more preferably V or less, and even more preferably T or less.

When the solid content concentration of the resin composition (1) is 50 mass%, the viscosity of the resin composition (1) measured by a Brookfield viscometer at 25°C (hereinafter also referred to as "Brookfield viscosity") is preferably less than 5000 mPa·s, more preferably less than 3000 mPa·s, even more preferably less than 2000 mPa·s, and particularly preferably less than 1000 mPa·s.

When the viscosity (Brookfield viscosity or Gardner viscosity) of the resin composition (1) is not more than the upper limit value, without further adding an organic solvent for dilution to the resin composition (1), the resin composition (1) can be blended with an antifouling agent and/or the like and/or to be painted, producing a paint composition with a low VOC content.

The resin composition (1) preferably has a viscosity not more than the above preferred upper limit with a solid content of at least 50 mass%.

The lower limit of the viscosity of the resin composition (1) is not particularly limited. In terms of preventing or reducing sagging of the paint during painting, the Gardner viscosity at 25°C is preferably B or more, and the Brookfield viscosity at 25°C is preferably 100 mPa·s or more.

Thus, when the solid content concentration of the resin composition (1) is 50 mass%, the Gardner viscosity at 25°C of the resin composition (1) is preferably B or more and Z or less. The Brookfield viscosity at 25°C of the resin composition (1) is preferably 100 mPa·s or more and less than 5000 mPa·s, more preferably 100 mPa·s or more and less than 3000 mPa·s, even more preferably 100 mPa·s or more and less than 2000 mPa·s, and particularly preferably 100 mPa·s or more and less than 1000 mPa·s.

The viscosity of the resin composition (1) can be adjusted by the solid content of the resin composition (1) (the content of the copolymer (X) and the additional component), the weight-average molecular weight, glass transition temperature, presence or absence of a crosslinked structure, and the like of the copolymer (X). For example, the viscosity tends to decrease as the solid content, particularly the content of the copolymer (X), decreases. In addition, the viscosity tends to decrease as the weight-average molecular weight or glass transition temperature of the copolymer (X) decreases.

The resin composition (1) can be prepared, for example, by producing the copolymer (X) as described above, and adding and mixing the organic solvent and/or the additional component as necessary. When the copolymer (X) is produced by a solution polymerization method, the organic solvent does not need to be added.

The VOC content of the resin composition (1) is preferably 500 g/L or less, more preferably 480 g/L or less, and even more preferably 440 g/L or less. When the VOC content is not more than the upper limit value, the amount of the organic solvent to be volatilized can be sufficiently suppressed.

The VOC content of the resin composition (1) is preferably 350 g/L or more in terms of viscosity and paintability.

The VOC content can be adjusted by the content of the organic solvent.

Here, the VOC content of the resin composition is the mass of VOC per liter of the resin composition and is calculated from the following Formula using the values of the specific gravity and solid content (residue on heating) of the resin composition.

VOC content (g/L) = specific gravity of resin composition $\times$ 1000 $\times$ (100 - solid content (mass%))/100

The specific gravity is calculated by filling a specific gravity cup with a volume of 100 mL with the resin composition at 25°C and measuring the mass.

The solid content (residue on heating) is measured by the method described in Examples below.

Operation Effects

**In** the resin composition (1) described above, the copolymer (X) has a specific composition (the content of the structural unit (A) is from 5 to 35 mass%, the content of the structural unit (B) is from 35 to 75 mass%, and the content of the structural unit based on the (meth)acrylic macromonomer is less than 13 mass%) and a weight-average molecular weight of 2000 or more and 6500 or less. Thus, the resin composition (1) can form a paint film exhibiting excellent transparency and antifouling effect and is unlikely to increase in viscosity during storage, exhibiting excellent storage stability.

The copolymer (X) contains the structural unit (A) and thus has the structure (I) in which a carboxy group is protected by a specific group. Thus, it is hydrolyzable in seawater and the like. Thus, the paint film containing the copolymer (X) exhibits self-polishing properties in seawater and the like. That is, the copolymer (X) has the structure (I) and is not dissolved in seawater in this state. However, when the structure (I) is hydrolyzed by the contact with seawater, a carboxy group and the like are formed, and the copolymer (X) is dissolved in seawater. The surface of the paint film is gradually dissolved in seawater and renewed (self-polished).

In addition, the copolymer (X) contains the structural unit (B) and thus has a polysiloxane block. Thus, marine organisms and other stains are less likely to attach to the surface of the paint film containing the copolymer (X), and the paint film exhibits an excellent antifouling effect even when the paint film does not contain an antifouling agent. When the paint film contains an antifouling agent, the antifouling agent is constantly exposed on the paint film surface because the paint film surface is renewed, stably exhibiting the antifouling effect by the antifouling agent over a long period.

In addition, the copolymer (X) has a combination of the specific amount of the structural unit (A) containing the hydrophilic structure (I) as a hydrolyzable structure and the specific amount of the structural unit (B) containing the hydrophobic polysiloxane block and thus has an even better long-term antifouling effect. This is considered as follows. The copolymer (X) contains the specific amount of the hydrophilic structure (I) and the specific amount of the hydrophobic polysiloxane block and thus forms the paint film into a phase-separated film. Thus, hydrolysis is repeated only on the

surface layer of the paint film, thereby preventing or reducing excessive dissolution and swelling of the paint film. This and other effects allow the paint film to stably exhibit the excellent antifouling effect over a long period.

In a resin composition known in the art containing: a copolymer containing a specific amount of a hydrophilic structure (I) and a specific amount of a hydrophobic polysiloxane block as described above; and an organic solvent, the copolymer has both hydrophilicity and hydrophobicity, and thus the viscosity increases with time and the storage stability decreases. When the resin composition increases in viscosity, the content of the organic solvent needs to be increased to adjust the viscosity to a level suitable for a paint, increasing the VOC content.

In the resin composition (1), the weight-average molecular weight of the copolymer (X) is in a specific low molecular weight range, thus allowing good storage stability. Thus, the resin composition (1) can be formed into a solution with a high solid content and a low viscosity, and using the resin composition (1) can produce a paint composition with a low VOC content.

The copolymer (X) with the composition in the above range and the weight-average molecular weight of more than 6500 tends to increase in viscosity with time. This is considered as follows. Because the cohesive force of the polymer increases and the copolymer (X) has both hydrophilicity of the structural unit (A) and hydrophobicity of the structural unit (B), the size of the polymer chain gradually changes in the organic solvent with time, thereby reducing the solubility in the organic solvent and increasing the viscosity.

When the viscosity of the resin composition with increased viscosity is measured again after heating at a high temperature, such as the polymerization temperature of the copolymer (X), the viscosity returns to a value immediately after production, and no change in the molecular weight is observed. Thus, the copolymer (X) is presumed to take time to reach the optimum polymer chain size in the organic solvent.

The resin composition (1) exhibits the above effects and thus is suitable for a paint composition, particularly for an antifouling paint composition. The resin composition (1) can be used as a paint composition as it is or formed into a paint composition by mixing with an antifouling agent or the like as necessary. However, the application of the resin composition (1) is not limited to this, and the resin composition (1) can also be used for applications other than the paint composition.

Resin Composition (2)

A resin composition according to another aspect of the present invention (hereinafter also described as "resin composition (2)") contains the copolymer (X) and the organic solvent.

The copolymer (X) and the organic solvent are each the same as described above.

The resin composition (2) may contain one or two or more copolymers (X). The same applies to the organic solvent.

The resin composition (2) may further contain an additional component besides the copolymer (X) and the organic solvent as necessary.

An additional component, such as those exemplified for the paint composition described later, can be used as an additional component.

In the resin composition (2), the content of the copolymer (X) is preferably from 10 to 65 mass%, more preferably from 15 to 60 mass%, and even more preferably from 20 to 55 mass% relative to the total mass of the resin composition (2). When the content of the copolymer (X) is not less than the lower limit value, the paint film obtained from the resin composition (2) exhibits even better antifouling properties. When the content of the copolymer (X) is not more than the upper limit value, the resin composition (2) exhibits even better paintability.

In the resin composition (2), the content of the organic solvent is any amount such that the VOC content is 500 g/L or less, but is preferably from 10 to 50 mass%, more preferably from 15 to 50 mass%, and even more preferably from 20 to 45 mass% relative to the total mass of the resin composition (2). When the content of the organic solvent is not more than the upper limit value, the VOC content is sufficiently low. When the content of the organic solvent is not less than the lower limit value, the viscosity of the resin composition (2) is readily reduced.

The solid content (residue on heating) of the resin composition (2) is any amount such that the VOC content is 500 g/L or less, but is preferably from 50 to 85 mass%, more preferably from 55 to 80 mass%, and even more preferably from 55 to 75 mass% relative to the total mass of the resin composition (2). When the solid content is not less than the lower limit value, the VOC content is sufficiently low. When the solid content is not more than the upper limit value, the viscosity of the resin composition (2) is readily reduced.

The VOC content of the resin composition (2) is 500 g/L or less, preferably 480 g/L or less, and more preferably 440 g/L or less. When the VOC content is not more than the upper limit value, the amount of the organic solvent to be volatilized can be sufficiently suppressed.

The VOC content of the resin composition (2) is preferably 350 g/L or more in terms of viscosity and paintability.

The VOC content can be adjusted by the content of the organic solvent.

When the solid content concentration of the resin composition (2) is 50 mass%, the Gardner viscosity of the resin composition (2) is preferably Z or less, more preferably W or less, even more preferably V or less, and particularly

preferably T or less.

The Brookfield viscosity at 25°C of the resin composition (2) is preferably less than 5000 mPa·s, more preferably less than 3000 mPa·s, and even more preferably less than 1000 mPa·s.

When the viscosity (Brookfield viscosity or Gardner viscosity) of the resin composition (2) is not more than the upper limit value, without further adding an organic solvent for dilution to the resin composition (2), the resin composition (2) can be blended with an antifouling agent and/or the like and/or to be painted, producing a paint composition with a low VOC content. In addition, the resin composition (2) with the viscosity not more than the above upper limit value is easy to paint.

The resin composition (2) preferably has a viscosity not more than the above preferred upper limit with a solid content of at least 50 mass%.

The lower limit of the Brookfield viscosity at 25°C of the resin composition (2) is not particularly limited, but in terms of the physical properties of the paint film, the Gardner viscosity at 25°C is preferably B or more and more preferably 100 mPa·s or more.

Thus, when the solid content concentration of the resin composition (2) is 50 mass%, the Gardner viscosity at 25°C of the resin composition (2) is more preferably B or more and Z or less. The Brookfield viscosity at 25°C of the resin composition (2) is preferably 100 mPa·s or more and less than 5000 mPa·s, more preferably 100 mPa·s or more and less than 3000 mPa·s, even more preferably 100 mPa·s or more and less than 2000 mPa·s, and particularly preferably 100 mPa·s or more and less than 1000 mPa·s.

The resin composition (2) can be prepared, for example, by producing the copolymer (X) as described above, and adding and mixing the organic solvent and/or the additional component as necessary. When the copolymer (X) is produced by a solution polymerization method, the organic solvent does not need to be added.

The resin composition (2) can be prepared, for example, by producing the copolymer (X) and adding and mixing the organic solvent and/or the additional component as necessary in the same manner as the resin composition (1).

### Operation Effects

In the resin composition (2) described above, the copolymer (X) has a specific composition (the content of the structural unit (A) is from 5 to 35 mass%, the content of the structural unit (B) is from 35 to 75 mass%, and the content of the structural unit based on the (meth)acrylic macromonomer is less than 13 mass%) and a weight-average molecular weight of 2000 or more and 6500 or less. Thus, the resin composition (2) can form a paint film exhibiting excellent transparency and antifouling effect and is unlikely to increase in viscosity during storage, exhibiting excellent storage stability.

In addition, in the resin composition (2), the copolymer (X) has a specific composition (the content of the structural unit (A) is from 5 to 35 mass%, the content of the structural unit (B) is from 35 to 75 mass%, and the content of the structural unit based on the (meth)acrylic macromonomer is less than 13 mass%) and a weight-average molecular weight of 2000 or more and 6500 or less, and the Gardner viscosity of the resin composition (2) is Z or less when the solid content concentration is 50 mass%. Thus, the paint film exhibits even better transparency and antifouling effect, and the resin composition (2) exhibits even better storage stability.

The resin composition (2) exhibits the above effects and thus is suitable for a paint composition, particularly for an antifouling paint composition. The resin composition (2) can be used as a paint composition as it is or formed into a paint composition by mixing with an antifouling agent or the like as necessary. However, the application of the resin composition (2) is not limited to this, and the resin composition (2) can also be used for applications other than the paint composition.

### Paint Composition

A paint composition according to one aspect of the present invention contains the resin composition (1) or (2) described above and thus contains the copolymer (X) and an organic solvent.

The copolymer (X) and the organic solvent are each the same as described above.

The paint composition may contain one or two or more copolymers (X). The same applies to the organic solvent.

The paint composition may further contain an additional component besides the copolymer (X) and the organic solvent as necessary.

At least a part of the components contained in the paint composition is derived from the resin composition (1) or (2) described above. A part of the components contained in the paint composition may be a component not derived from the resin composition (1) or (2) described above (a component blended during production of the paint composition).

### Additional Component

The paint composition may further contain a silicone oil. The paint composition containing a silicone oil forms a paint film with even better antifouling properties.

Examples of the silicone oil include straight silicone oils, such as dimethyl silicone oil, methylphenyl silicone oil,

and methyl hydrogen silicone oil; and modified silicone oils. The modified silicone oil is a silicone oil in which an organic group (hereinafter also referred to as "modifying group") other than a methyl group and a phenyl group is introduced into some of silicon atoms of a straight silicone oil. Examples of the modifying group include a chlorophenyl group, a methylstyrene group, a long-chain alkyl group (e.g., an alkyl group with 2 to 18 carbons), a polyether group, a carbinol group, an aminoalkyl group, an epoxy group, and a (meth)acryloyl group. Any one of these silicone oils can be used alone, or two or more can be used in combination. Among the above, the silicone oil is preferably a polyether-modified silicone oil having a polyether group as a modifying group in terms of antifouling properties.

A commercially available product can be used as the silicone oil. Examples of the commercially available product include "KF-96", "KF-50", "KF-54", "KF-56", and "KF-6016" (all above available from Shin-Etsu Chemical Co., Ltd.), "TSF451" (available from Momentive Performance Materials Inc.), "Fluid 47" (available from Rhone-Poulenc S.A. (France)), "SH200", "SH510", "SH550", "SH710", "DC200", "ST-114PA", and "FZ209" (all above available from Dow Corning Toray Co., Ltd.).

The paint composition may further contain an antifouling agent from the viewpoint of the antifouling properties of the paint film. The paint composition containing an antifouling agent forms a paint film with even better antifouling properties.

Examples of the antifouling agent include inorganic antifouling agents and organic antifouling agents, and one or two or more of these can be appropriately selected and used according to the required performance.

Specific examples of the antifouling agent include a copper-based antifouling agent, such as copper (I) oxide, copper thiocyanate, and copper powder; a compound of another metal (such as lead, zinc, or nickel); an amine derivative, such as diphenylamine; a nitrile compound; a benzothiazole-based compound; a maleimide-based compound; and a pyridine-based compound. One of these can be used alone, or two or more can be used in combination.

More specific examples of the antifouling agent include 4-bromo-2-(4-chlorophenyl)-5-(trifluoromethyl)-1H-pyrrole-3-carbonitrile, manganese ethylenebisdithiocarbamate, zinc dimethyldithiocarbamate, 2-methylthio-4-t-butylamino-6-cyclopropylamino-s-triazine, 2,4,5,6-tetrachloroisophthalonitrile, N,N-dimethyldichlorophenylurea, zinc ethylenebisdithiocarbamate, copper rhodanide, 4,5-dichloro-2-n-octyl-4-isothiazolin-3-one, N-(fluorodichloromethylthio) phthalimide, N,N'-dimethyl-N'-phenyl-(N-fluorodichloromethylthio)sulfamide, 2-pyridinethiol-1-oxide zinc salt (also referred to as "zinc pyrithione"), tetramethylthiuram disulfide, a Cu-10% Ni solid solution alloy, 2,4,6-trichlorophenylmaleimide, 2,3,5,6-tetrachloro-4-(methylsulfonyl)pyridine, 3-iodo-2-propynyl butylcarbamate, diiodomethyl p-tolyl sulfone, bisdimethyldithiocarbamoyl zinc ethylenebisdithiocarbamate, phenyl(bispyridyl)bismuth dichloride, 2-(4-thiazolyl)benzimidazole, medetomidine, pyridinetriphenylborane, and 4,5-dichloro-2-n-octyl-isothiazolin-3-one.

Among the above, in terms of antifouling properties, the antifouling agent preferably contains at least one selected from the group consisting of copper (I) oxide, 4-bromo-2-(4-chlorophenyl)-5-(trifluoromethyl)-1H-pyrrole-3-carbonitrile (hereinafter also referred to as "antifouling agent (d1)"), medetomidine, and 4,5-dichloro-2-n-octyl-isothiazolin-3-one.

When copper (I) oxide and the antifouling agent (d1) are used in combination, the ratio (mass ratio) of copper (I) oxide/antifouling agent (d1) is preferably from 80/20 to 99/1 and more preferably from 90/10 to 99/1.

At least one selected from the group consisting of copper (I) oxide, the antifouling agent (d1), medetomidine, and 4,5-dichloro-2-n-octyl-isothiazolin-3-one may be combined with another antifouling agent.

The paint composition may contain a silicon compound (with proviso that a silicone oil is excluded), such as dimethylpolysiloxane, or a fluorine-containing compound, such as a fluorinated hydrocarbon, for the purpose of imparting lubricity to the surface of the paint film and preventing the attachment of organisms.

The paint composition may contain any of various pigments, a defoamer, a leveling agent, a pigment dispersant (e.g., an anti-settling agent), an anti-sagging agent, a matting agent, an ultraviolet absorber, an antioxidant, a heat resistance improver, a slip agent, a preservative, a plasticizer, a viscosity control agent, and/or the like.

Incorporating a plasticizer into the paint composition can enhance the crack resistance and peeling resistance of the paint film. The plasticizer is preferably chlorinated paraffin in terms of obtaining effects of improving the crack resistance and peeling resistance of the paint film.

In terms of functioning as an anti-settling agent and/or an anti-sagging agent and obtaining effects of improving the storage stability of the paint composition and/or the pigment dispersibility, the plasticizer is preferably an organic wax, such as a semisynthetic wax or a synthetic wax, and more preferably a polyethylene wax, an oxidized polyethylene wax, or a polyamide wax.

Examples of the pigment include zinc oxide, talc, silica, barium sulfate, potassium feldspar, aluminum hydroxide, magnesium carbonate, mica, carbon black, red iron oxide, titanium oxide, phthalocyanine blue, kaolin, and gypsum. In particular, the pigment is preferably zinc oxide and/or talc.

Examples of the anti-settling agent and anti-sagging agent other than a thermoplastic resin include a bentonite-based material, a fine silica-based material, a stearate salt, a lecithin salt, and an alkyl sulfonate salt.

In the paint composition, the content of the copolymer (X) is preferably from 10 to 65 mass%, more preferably from 15 to 60 mass%, and even more preferably from 20 to 55 mass% relative to the total mass of the paint composition.

When the content of the copolymer (X) is not less than the lower limit value, the paint composition exhibits even better antifouling properties. When the content of the copolymer (X) is not more than the upper limit value, the paint composition exhibits even better paintability.

In the paint composition, the content of the organic solvent is any amount such that the VOC content is 500 g/L or less, but is preferably from 10 to 50 mass%, more preferably from 15 to 50 mass%, and even more preferably from 20 to 45 mass% relative to the total mass of the paint composition. When the content of the organic solvent is not more than the upper limit value, the VOC content is sufficiently low. When the content of the organic solvent is not less than the lower limit value, the viscosity of the paint composition is readily reduced.

In a case where the paint composition contains a silicone oil, the content of the silicone oil in the paint composition is preferably from 0.1 to 40 mass% and more preferably from 1 to 20 mass% relative to the total mass of the paint composition. When the content of the silicone oil is not less than the lower limit value, even better antifouling properties can be achieved. When the content of the silicone oil is not more than the upper limit value, the paint film exhibits even better dissolution stability.

In a case where the paint composition contains an antifouling agent, the content of the antifouling agent in the paint composition is not particularly limited, but is preferably from 10 to 200 parts by mass and more preferably from 50 to 150 parts by mass relative to 100 parts by mass of the copolymer (X). When the content of the antifouling agent is not less than the lower limit value, the paint film formed by the paint composition exhibits even better antifouling effect. When the content of the antifouling agent is not more than the upper limit value, the paint film exhibits even better physical properties.

The solid content (residue on heating) of the paint composition is any amount such that the VOC content is 500 g/L or less, but is preferably from 50 to 85 mass%, more preferably from 55 to 80 mass%, and even more preferably from 55 to 75 mass% relative to the total mass of the paint composition. When the solid content is not less than the lower limit value, the VOC content is sufficiently low. When the solid content is not more than the upper limit value, the viscosity of the paint composition is readily reduced.

The VOC content of the paint composition is 500 g/L or less, preferably 480 g/L or less, more preferably 440 g/L or less, and even more preferably 420 g/L or less. When the VOC content is not more than the upper limit value, the amount of the organic solvent to be volatilized is sufficiently suppressed.

The VOC content of the paint composition is preferably 350 g/L or more in terms of the viscosity and paintability of the paint composition.

The method for measuring the VOC content is the same as described above.

The Brookfield viscosity at 25°C of the paint composition is preferably less than 5000 mPa·s, more preferably less than 3000 mPa·s, and even more preferably less than 1000 mPa·s. When the viscosity of the paint composition is not more than the upper limit value, the paint composition is easy to paint.

The lower limit of the Brookfield viscosity at 25°C of the paint composition is not particularly limited, but in terms of the physical properties of the paint film, the Gardner viscosity at 25°C is preferably B or more and more preferably 100 mPa·s or more.

The paint composition can be prepared, for example, by preparing the resin composition of the present aspect as described above, and adding and mixing the additional component and a further organic solvent as necessary. In this case, the VOC content and viscosity of the paint composition can be adjusted by the viscosity of the resin composition, the amount of the organic solvent added to the resin composition, and the like.

The paint composition can be used for forming a paint film (antifouling paint film) on the surface of a substrate of an underwater structure and the like, such as ships, various fishing nets, harbor facilities, oil fences, bridges, and seabed bases.

The paint film using the paint composition can be formed on the surface of the substrate directly or via an underlying paint film.

The underlying paint film can be formed using a wash primer; a primer, such as a chlorinated rubber primer or an epoxy primer; an intermediate paint; and/or the like.

The paint film can be formed by a known method. For example, the paint film can be formed by painting the paint composition onto the surface of a substrate or onto an underlying paint film by means, such as brush painting, spray painting, roller painting, or dip painting; and then drying.

The paint amount of the paint composition can be usually set at an amount such that a dry paint film has a thickness of 10 to 400 μm.

The paint film can be dried usually at room temperature, and may be dried by heating as necessary.

## Operation Effects

In the paint composition described above, the copolymer (X) has a specific composition (the content of the structural unit (A) is from 5 to 35 mass%, the content of the structural unit (B) is from 35 to 75 mass%, and the content of the structural unit based on the (meth)acrylic macromonomer is less than 13 mass%) and a weight-average molecular weight

of 2000 or more and 6500 or less. Thus, as the resin composition (1) or (2) described above, the paint composition can form a paint film exhibiting excellent transparency and antifouling effect and is unlikely to increase in viscosity during storage, exhibiting excellent storage stability.

## Examples

Hereinafter, the present invention will be described in further detail through examples and comparative examples, but the present invention is in no way limited by these examples. In Examples, "parts" indicates "parts by mass".
The evaluations in Examples were performed by the methods developed below.

### Solid Content (Residue on Heating)

In an aluminum dish, 0.50 g of a sample (resin composition) was weighed, and 3 mL of toluene was added with a dropper to spread the sample uniformly on the bottom of the dish, and the sample was preliminarily dried. The preliminary drying is a treatment for spreading the sample over the entire dish and facilitating the volatilization of the solvent in the main drying. In the preliminary drying, the sample and toluene were heated on a water bath at 70 to 80°C to dissolve the sample, and the resulting solution was evaporated to dryness. After the preliminary drying, the main drying was performed with a hot air dryer at 105°C for 2 hours. From the mass of the sample before the preliminary drying (mass before drying) and the mass of the sample after the main drying (mass after drying), the solid content (residue on heating) was determined according to the following equation:

$$\text{Solid content (mass\%)} = \text{mass after drying (g)/mass before drying (g)} \times 100$$

### Brookfield Viscosity

The viscosity of the sample was measured by a Brookfield viscometer at 25°C, and the value was shown as the Brookfield viscosity.

### Gardner Viscosity

A sample was placed in a dried Gardner bubble viscosity tube (hereinafter also referred to simply as "viscosity tube") up to the index line of the viscosity tube, and the tube was sealed with a cork stopper. The viscosity tube containing the sample was vertically immersed in a constant-temperature water bath adjusted to a predetermined temperature (25.0 ± 0.1°C) for at least 2 hours to keep the sample at a constant temperature. A viscosity tube serving as a reference tube and the viscosity tube containing the sample were simultaneously rotated by 180°, and the viscosity (Gardner viscosity) was determined by comparing the bubble rising speed of the sample with that of the reference tube.

### Measured Solution Acid Value

About 4.0 g of a sample (resin composition) was precisely weighed (A (g)) in a beaker, and 50 mL of toluene/95% ethanol solution at a ratio of 50/50 was added. After stirring in a tightly closed container for 5 minutes, potentiometric titration was performed using a Hiranuma automatic titrator (AUTO TITRATOR COM-1600) with a 0.5 mol/L potassium hydroxide solution (ethanol solution) with a factor (f) of 1.003 at 20°C available from Kishida Chemical Co., Ltd. The maximum slope point of the titration curve was taken as the end point (titration volume = B (mL), titer of KOH solution = f). Blank measurement was performed in the same manner (titration volume = C (mL)), and the measured solution acid value was calculated according to the following equation:

$$\text{Measured solution acid value (mg KOH/g)} = \{(B-C) \times 0.5 \times 56.11 \times f\}/A$$

### Weight-Average Molecular Weight (Mw) and Number-Average Molecular Weight (Mn)

The weight-average molecular weight (Mw) and the number-average molecular weight (Mn) of the polymer were measured using gel permeation chromatography (GPC) (HLC-8220, available from Tosoh Corporation). Columns, a TSKgel α-M (7.8 mm × 30 cm, available from Tosoh Corporation) and a TSK guardcolumn α (6.0 mm × 4 cm, available from Tosoh Corporation), were used. The calibration curve was prepared using F288/F1/F28/F80/F40/F20/F2/A1000 (standard polystyrenes, available from Tosoh Corporation) and a styrene monomer.

VOC Content

The VOC content of the resin composition was calculated from the following equation:

$$\text{VOC content (g/L)} = \text{specific gravity of composition} \times 1000 \times (100 - \text{solid content})/100$$

The method for measuring the solid content is as described above. The specific gravity was calculated by filling a specific gravity cup with a volume of 100 mL with the resin composition at 25°C and measuring the mass.

Storage Stability of Resin Composition

The viscosity change rate was determined as an index of the storage stability of the resin composition by the following method.

The Brookfield viscosity (Brookfield viscosity before storage) (mPa. s) of the produced resin composition was measured. The resin composition was placed in a 150-mL glass bottle and stored at 25°C for 10 days. Thereafter, the Brookfield viscosity (Brookfield viscosity after storage) (mPa. s) of the resin composition was measured, and the viscosity change rate (%) was calculated by the following equation:

Viscosity change rate (%) = Brookfield viscosity after storage (mPa·s)/Brookfield viscosity before storage (mPa·s) × 100

Paint Film Consumption Degree Test

The produced resin composition was painted with an applicator onto a hard vinyl chloride plate of 50 mm × 50 mm × 2 mm (thickness) so as to have a dry film thickness of 120 μm and dried to form a paint film, thereby obtaining a test plate. The test plate was mounted on a rotating drum placed in seawater, and the drum was rotated at a peripheral speed of 7.7 m/s (15 knots). This state was maintained for 3 months, and the film thickness (μm) of the paint film was measured 3 months after the placement. From the measured film thickness, the consumed film thickness (120 μm - measured film thickness) after 3 months was calculated, and the value was taken as the consumption degree.

Visual Appearance of Paint Film

The produced resin composition was painted with an applicator onto a glass plate so as to have a dry film thickness of approximately 130 μm and dried to form a paint film, thereby obtaining a test plate. The appearance of the test plate was visually observed to confirm whether white cloudiness occurred.

Haze Value of Paint Film

The haze value of the test plate used for the visual appearance evaluation of the paint film was measured using a haze meter (product name "Haze Meter NDH8000", available from Nippon Denshoku Industries Co., Ltd.) in accordance with JIS K 7136.

Static Antifouling Properties

The produced resin composition was painted with a brush onto a sandblasted steel plate onto which a rust-preventive paint had been applied in advance so as to have a dry film thickness of 200 to 300 μm and dried to form a paint film, thereby obtaining a test plate. After the test plate was allowed to stand undisturbed for 6 months, the proportion of the area to which marine organisms were attached (attachment area by marine organisms) to the total area of the paint film was examined, and the static antifouling properties were evaluated according to the following criteria.

◎: The attachment area by marine organisms is 10% or less.
○: The attachment area by marine organisms is more than 10% and 20% or less.
△: The attachment area by marine organisms is more than 20% and 40% or less.
×: The attachment area by marine organisms is more than 40%.

Materials Used

PGM: Propylene glycol methyl ether.
Monomer (M1): A metal atom-containing polymerizable monomer mixture synthesized in Production Example M1 described later.
Monomer (M2): A metal atom-containing polymerizable monomer mixture synthesized in Production Example M2 described later.
FM-0711: trade name, available from JNC Corporation (polysiloxane block-containing polymerizable monomer represented by Formula (b1) above, where v = 0, $R^{3a}$ to $R^{3f}$ = methyl groups, w = 3, and x = 10).
X-24-8201: trade name, available from Shin-Etsu Chemical Co., Ltd. (polysiloxane block-containing polymerizable monomer represented by Formula (b1) above, where v = 0, $R^{3a}$ to $R^{3f}$ = methyl groups, w = 3, and x = 25).
FM-7721: trade name, available from JNC Corporation (polysiloxane block-containing polymerizable monomer represented by Formula (b4) above, where l and q = 0, m and o = 3, $R^{1a}$ to $R^{1f}$ = methyl groups, and n = 65).
MMA: methyl methacrylate.
EA: ethyl acrylate.
MTA: 2-methoxyethyl acrylate.
BA: n-butyl acrylate.
MMA-MM: a methyl methacrylate macromonomer synthesized in Production Example MMA-MM described later.
AIBN: 2,2'-azobisisobutyronitrile.
AMBN: 2,2'-azobis(2-methylbutyronitrile).
Nofmer MSD: trade name, $\alpha$-methylstyrene dimer, available from NOF Corporation.

Production Example M1

A reaction vessel equipped with a stirrer, a temperature controller, and a dropping funnel was charged with 85.4 parts of PGM and 40.7 parts of zinc oxide, and the temperature was raised to 75°C while the mixture was stirred. Subsequently, a mixture of 43.1 parts of methacrylic acid, 36.1 parts of acrylic acid, and 5 parts of water was added dropwise from the dropping funnel at a constant rate over 3 hours. After further stirring for 2 hours, 36 parts of PGM was added, thereby obtaining a transparent metal atom-containing polymerizable monomer mixture (monomer (M1)) with a solid content of 44.8 mass%.

Production Example M2

A reaction vessel equipped with a stirrer, a temperature controller, and a dropping funnel was charged with 72.4 parts of PGM and 40.7 parts of zinc oxide, and the temperature was raised to 75°C while the mixture was stirred. Subsequently, a mixture of 30.1 parts of methacrylic acid, 25.2 parts of acrylic acid, and 51.6 parts of versatic acid was added dropwise from the dropping funnel at a constant rate over 3 hours. After further stirring for 2 hours, 11 parts of PGM was added, thereby obtaining a transparent metal atom-containing polymerizable monomer mixture (monomer (M2)) with a solid content of 59.6 mass%.

Production Example MMA-MM

In a polymerization apparatus equipped with a stirrer, a cooling tube, and a thermometer, 900 parts of deionized water, 60 parts of sodium 2-sulfoethyl methacrylate, 10 parts of potassium methacrylate, and 12 parts of methyl methacrylate (MMA) were placed and stirred, and the temperature was raised to 50°C while the inside of the polymerization apparatus was purged with nitrogen. Into the polymerization apparatus, 0.08 parts of 2,2'-azobis(2-methylpropionamidine) dihydrochloride was added as a polymerization initiator, and the temperature was further raised to 60°C. After the temperature was raised, MMA was continuously added dropwise at a rate of 0.24 parts/min for 75 minutes using a dropping pump. The reaction solution was maintained at 60°C for 6 hours and then cooled to room temperature, thereby obtaining a dispersant 1, a transparent aqueous solution with a solid content of 10 mass%.
Next, in a polymerization apparatus equipped with a stirrer, a cooling tube, and a thermometer, 145 parts of deionized water, 0.1 parts of sodium sulfate, and 0.25 parts of the dispersant 1 (solid content 10 mass%) were placed and stirred to form a uniform aqueous solution. Subsequently, 100 parts of MMA, 0.008 parts of bis[(difluoroboryl) diphenylglyoximate] cobalt (II) as a chain transfer agent, and 0.8 parts of "Perocta O" (trade name) (1,1,3,3-tetramethylbutylperoxy 2-ethylhexanoate, available from NOF Corporation) as a polymerization initiator were added to form an aqueous suspension.
Next, the inside of the polymerization apparatus was purged with nitrogen, and the temperature was raised to 80°C to react the aqueous suspension for 4 hours. To further increase the polymerization rate, the temperature was raised

to 90°C and maintained for 2 hours. Thereafter, the reaction liquid was cooled to 40°C, thereby obtaining an aqueous suspension containing a macromonomer. This aqueous suspension was filtered, and the filter cake was washed with deionized water, dehydrated, and dried at 40°C for 16 hours, thereby obtaining a macromonomer (MMA-MM). The resulting MMA-MM had a number-average molecular weight of 1600 and a molecular weight distribution (Mw/Mn) of 2.0.

Production Example A-1

A reaction vessel equipped with a stirrer, a temperature controller, and a dropping device was charged with 30 parts of xylene, 15 parts of n-butanol, and 4 parts of EA, and the temperature was raised to 100°C while the mixture was stirred. Subsequently, a mixture of 26.6 parts (12 parts in terms of solid content) of the monomer (M1), 40 parts of FM-0711, 30.3 parts of MMA, 13.9 parts of EA, 1 part of AIBN, 7.5 parts of AMBN, and 1.5 parts of Nofmer MSD was added dropwise from a dropping funnel at a constant rate over 6 hours. After completion of the dropwise addition, 0.5 parts of tert-butyl peroxyoctoate and 4.0 parts of xylene were added dropwise at a constant rate over 30 minutes. After further stirring for 1 hour, 16.4 parts of xylene was added, thereby obtaining a resin composition A-1 containing a copolymer.

Table 1 shows the evaluation results of the properties (solid content, measured solution acid value, Gardner viscosity immediately after production (hereinafter also described as "initial viscosity"), weight-average molecular weight and number-average molecular weight of the contained copolymer, and film haze value), storage stability (viscosity change rate), and paint film performance (consumption degree) of the resin composition A-1.

Production Examples A-2 to A-15

Resin compositions A-2 to A-15 were produced in the same manner as in Production Example A-1 except for changing the type and amount of monomer and the type and amount of initiator as shown in Tables 1 to 3, and adjusting the amount of xylene after completion of the dropwise addition according to the amount of additives so that the theoretical solid content was 55 mass%.

Tables 1 to 3 show the evaluation results of the properties (solid content, initial viscosity, and weight-average molecular weight and number-average molecular weight of the contained copolymer) and storage stability (viscosity change rate) of the resin compositions A-2 to A-15.

In Tables 1 to 3, the numerical values shown in the columns of "Monomer" and "Initiator" indicate the charged amounts (parts). The values shown in parentheses for the charged amounts of the monomers (M1) and (M2) are the charged amounts as solid contents, and the values shown above are the total charged amounts including the organic solvent.

[Table 1]

| | | Production Example | | | | | |
|---|---|---|---|---|---|---|---|
| | | A-1 | A-2 | A-3 | A-4 | A-5 | A-6 |
| Monomer (a) | M1 | 26.6 (12) | 26.6 (12) | 26.6 (12) | 31.1 (14) | 31.1 (14) | 26.6 (12) |
| | M2 | | | | | | |
| Monomer (b) | FM-0711 | 40 | 65 | 40 | 40 | 35 | 50 |
| | X-24-8201 | | | | | | |
| | FM-7721 | | | | | | |
| Monomer (c) | MMA | 30.3 | 18 | 17 | 16 | 30 | 28 |
| | EA | 17.9 | 5 | 26 | 30 | 14 | 10 |
| | MA | | | 5 | | | |
| | BA | | | | | 7 | |
| | MMA-MM | | | | | | |
| Initiator | AIBN | 1 | 1 | 1 | 1 | 1 | 1 |
| | AMBN | 7.5 | 7.5 | 6.5 | 5.5 | 8.5 | 7.5 |
| Chain transfer agent | Nofmer MSD | 1.5 | 1.5 | 1.5 | 1.5 | 1.5 | 1.5 |

(continued)

| | | Production Example | | | | | |
|---|---|---|---|---|---|---|---|
| | | A-1 | A-2 | A-3 | A-4 | A-5 | A-6 |
| Properties | Solid content [mass%] | 55.5 | 55.1 | 55.2 | 55.4 | 55.2 | 55.3 |
| | Measured solution acid value [mg KOH/g] | 31.2 | 30.4 | 30.9 | 36.3 | 36.9 | 31.3 |
| | Weight-average molecular weight | 5500 | 5800 | 6200 | 6200 | 4800 | 5800 |
| | Number-average molecular weight | 2200 | 2500 | 2400 | 2400 | 2100 | 2500 |
| | Initial viscosity | Q | GH | -V | V | TU | LM |
| | VOC content [g/L] | 440 | 440 | 440 | 440 | 440 | 440 |
| Storage stability | Viscosity change rate [%] | 110 | 120 | 140 | 130 | 140 | 140 |

[Table 2]

| | | Production Example | | | | | | |
|---|---|---|---|---|---|---|---|---|
| | | A-7 | A-8 | A-9 | A-10 | A-11 | A-12 | A-13 |
| Monomer (a) | M1 | 31.1 (14) | 31.1 (14) | 31.1 (14) | 37.7 (17) | | 26.6 (12) | 26.6 (12) |
| | M2 | | | | | 20.1 (12) | | |
| Monomer (b) | FM-0711 | 30 | 40 | 30 | 35 | 40 | 20 | 20 |
| | X-24-8201 | | | | | | 20 | |
| | FM-7721 | | | | | | | 20 |
| Monomer (c) | MMA | 26 | 26 | 26 | 18 | 17 | 17 | 17 |
| | EA | 30 | 30 | 30 | 30 | 26 | 26 | 26 |
| | MA | | | | | 5 | 5 | 5 |
| | BA | | | | | | | |
| | MMA-MM | | | | | | | |
| Initiator | AIBN | 2.5 | 1 | 1 | 1 | 1 | 1 | 1 |
| | AMBN | 4 | 2.5 | 16 | 8.5 | 6.5 | 7.5 | 8.5 |
| Chain transfer agent | Nofmer MSD | 1.5 | 1.5 | 1.5 | 1.5 | 1.5 | 1.5 | 1.5 |
| Properties | Solid content [mass%] | 47.7 | 46.3 | 55.5 | 55.5 | 55.2 | 55.2 | 55.4 |
| | Measured solution acid value [mg KOH/g] | 32.6 | 31.7 | 36.4 | 44.4 | 30.9 | 31.4 | 31.2 |
| | Weight-average molecular weight | 6400 | 6700 | 3600 | 4900 | 6000 | 6200 | 6000 |
| | Number-average molecular weight | 2500 | 2500 | 1500 | 2200 | 2500 | 2400 | 2500 |
| | Initial viscosity | WX | WX | W | VW | G | YZ | Z |
| | VOC content [g/L] | 505 | 520 | 440 | 440 | 440 | 440 | 440 |

(continued)

| | | Production Example | | | | | | |
|---|---|---|---|---|---|---|---|---|
| | | A-7 | A-8 | A-9 | A-10 | A-11 | A-12 | A-13 |
| Storage stability | Viscosity change rate [%] | 170 | 330 | 130 | 140 | 110 | 120 | 130 |

[Table 3]

| | | Production Example | |
|---|---|---|---|
| | | A-14 | A-15 |
| Monomer (a) | M1 | 26.6 (12) | 26.6 (12) |
| | M2 | | |
| Monomer (b) | FM-0711 | 40 | 40 |
| | X-24-8201 | | |
| | FM-7721 | | |
| Monomer (c) | MMA | | |
| | EA | 6 | 35 |
| | MA | 34 | |
| | BA | | |
| | MMA-MM | 8 | 13 |
| Initiator | AIBN | 1 | 1 |
| | AMBN | 7 | 5.4 |
| Chain transfer agent | Nofmer MSD | 1.5 | 1.5 |
| Properties | Solid content [mass%] | 55.6 | 55.6 |
| | Measured solution acid value [mg KOH/g] | 29.6 | 29.6 |
| | Weight-average molecular weight | 4800 | 5800 |
| | Number-average molecular weight | 1700 | 2000 |
| | Initial viscosity | CD | C |
| | VOC content [g/L] | 440 | 440 |
| Storage stability | Viscosity change rate [%] | 120 | 120 |

Examples 1 to 11 and Comparative Examples 1 to 4

Examples 1 to 11 and Comparative Examples 1 to 4 using the resin compositions A-1 to A-15 are shown in Table 4. In Table 4, the numerical values shown in the column of "composition" indicate the blending amount (parts). The blending amount of the resin composition is the amount of the entire resin composition.

Table 4 shows the evaluation results of the paint film performance (degree of consumption, static antifouling properties, and visual appearance) of the paint films obtained from the described resin compositions.

In addition, for Examples 1 and 11, and Comparative Example 4, the evaluation results of the film haze values of the paint films obtained from the described resin compositions are shown.

[Table 4]

| | | Example | | | | | | Comparative Example | | | Example | | | | | Comparative Example |
|---|---|---|---|---|---|---|---|---|---|---|---|---|---|---|---|---|
| | | 1 | 2 | 3 | 4 | 5 | 6 | 1 | 2 | 3 | 7 | 8 | 9 | 10 | 11 | 4 |
| Resin composition | A-1 | 100 | - | - | - | - | - | - | - | - | - | - | - | - | - | - |
| | A-2 | - | 100 | - | - | - | - | - | - | - | - | - | - | - | - | - |
| | A-3 | - | - | 100 | - | - | - | - | - | - | - | - | - | - | - | - |
| | A-4 | - | - | - | 100 | - | - | - | - | - | - | - | - | - | - | - |
| | A-5 | - | - | - | - | 100 | - | - | - | - | - | - | - | - | - | - |
| | A-6 | - | - | - | - | - | 100 | - | - | - | - | - | - | - | - | - |
| | A-7 | - | - | - | - | - | - | 100 | - | - | - | - | - | - | - | - |
| | A-8 | - | - | - | - | - | - | - | 100 | - | - | - | - | - | - | - |
| | A-9 | - | - | - | - | - | - | - | - | 100 | - | - | - | - | - | - |
| | A-10 | - | - | - | - | - | - | - | - | - | 100 | - | - | - | - | - |
| | A-11 | - | - | - | - | - | - | - | - | - | - | 100 | - | - | - | - |
| | A-12 | - | - | - | - | - | - | - | - | - | - | - | 100 | - | - | - |
| | A-13 | - | - | - | - | - | - | - | - | - | - | - | - | 100 | - | - |
| | A-14 | - | - | - | - | - | - | - | - | - | - | - | - | - | 100 | - |
| | A-15 | - | - | - | - | - | - | - | - | - | - | - | - | - | - | 100 |
| Paint film performance | Consumption degree | 4.7 | 3.0 | 6.3 | 10.5 | 12.6 | 3.8 | 9.1 | 3.5 | 35 | 12.4 | 4.5 | 5.5 | 4.2 | 11.6 | 4 |
| | Static antifouling properties | ◎ | Δ | ◎ | ◎ | ○ | ○ | ○ | ○ | × | ○ | ○ | ○ | ○ | ◎ | △ |
| | Visual appearance | Transparent | Transparent | Transparent | Transparent | Transparent | Transparent | Transparent | Transparent | Transparent | Transparent | Transparent | Transparent | Transparent | Very slightly whitened | Whitened |
| | Film haze value | 0.5 | | | | | | | | | | | | | 2 | 5.6 |

The resin compositions A-1 to A-6 and A-10 to A-14 had a small change in viscosity during storage, exhibiting excellent storage stability. In addition, the paint films of these resin compositions had an appropriate consumption degree. Furthermore, the paint films of Examples 1 to 11 using these resin compositions exhibited excellent static antifouling properties and had a good visual appearance evaluation, exhibiting excellent light transmittance.

Moreover, the paint films of Examples 1 and 11 obtained from the resin compositions A-1 and A-14 can be said to have excellent light transmittance also from the low film haze value.

On the other hand, the resin composition A-7 with the content of the structural unit (B) in the copolymer of less than 35 mass% had a high viscosity and poor ability to reduce VOC, also exhibiting poor storage stability.

The resin composition A-8 with the weight-average molecular weight of the copolymer of more than 6500 exhibited poor storage stability.

The resin composition A-9 with the weight-average molecular weight of the copolymer lower than that of the resin composition A-7 exhibited improved storage stability but had poor long-term antifouling properties due to an excessively high consumption degree of the paint film. This was also confirmed by the evaluation results of the static antifouling properties of Comparative Example 3 using the resin composition A-9.

The paint film obtained from the resin composition A-15 with the content of the structural unit based on MMA-MM in the copolymer of 13 mass% or more had a high film haze value, exhibiting poor light transmittance.

Industrial Applicability

According to the present invention, there can be provided a resin composition that can form a paint film exhibiting excellent antifouling effect and is unlikely to increase in viscosity during storage, exhibiting excellent storage stability.

The paint film obtained using the resin composition of the present invention can be suitably used for preventing adhesion of marine organisms.

## Claims

**1.** A resin composition comprising:

a (meth)acrylic copolymer and an organic solvent,
the (meth)acrylic copolymer including:

a structural unit (A) based on a metal atom-containing polymerizable monomer (a) including a structure represented by Formula (1) or (2) and an ethylenically unsaturated bond; and
a structural unit (B) based on at least one polysiloxane block-containing polymerizable monomer (b) selected from the group consisting of a polymerizable monomer represented by Formula (b1), a polymerizable monomer represented by Formula (b2), a polymerizable monomer represented by Formula (b3), and a polymerizable monomer represented by Formula (b4);
wherein

a content of the structural unit (A) is from 5 to 35 mass%, a content of the structural unit (B) is from 35 to 75 mass%, and a content of the structural unit based on a (meth)acrylic macromonomer is less than 13 mass%, relative to a total mass of all structural units constituting the (meth)acrylic copolymer,
a weight-average molecular weight of the (meth)acrylic copolymer is 2000 or more and 6500 or less, and
a VOC content is 500 g/L or less:

$$\text{-CO-O-M-O-CO-} \quad (1)$$

$$\text{-CO-O-M-}R^0 \quad (2)$$

$$CH_2\text{=}CR^{3a}\text{-CO-O-}(C_uH_{2u}\text{-O})_v\text{-}C_wH_{2w}\text{-}(SiR^{3b}R^{3c}\text{-O})_x\text{-}SiR^{3d}R^{3e}R^{3f} \quad (b1)$$

$$CH_2\text{=}CR^{4a}\text{-CO-O-}(C_{u'}H_{2u'}\text{-O})_{v'}\text{-}C_{w'}H_{2w'}\text{-Si}(OSiR^{4b}R^{4c}R^{4d})_3 \quad (b2)$$

$$CH_2\text{=}CR^{2a}\text{-CO-O-}(C_{k'}H_{2k'}\text{-O})_{l'}\text{-}C_{m'}H_{2m'}\text{-Si}((OSiR^{2b}R^{2c})_rOSiR^{2d}R^{2e}R^{2f})_2\text{-OSi}((O\text{-}SiR^{2g}R^{2h})_s\text{-}OSiR^{2i}R^{2j}R^{2k})_2\text{-}C_{o'}H_{2o'}\text{-}(O\text{-}C_{p'}H_{2p'})_{q'}\text{-O-CO-}CR^{2l}\text{=}CH_2 \quad (b3)$$

$$CH_2\text{=}CR^{1a}\text{-CO-O-}(C_kH_{2k}\text{-O})_l\text{-}C_mH_{2m}\text{-}(SiR^{1b}R^{1b}\text{-O})_n\text{-}SiR^{1d}R^{1e}\text{-}C_oH_{2o}\text{-(O-}$$

$C_pH_{2p})_q$-O-CO-$CR^{1f}$=$CH_2$ (b4)

where M represents Zn, Cu, Mg, or Ca, and $R^0$ represents a monovalent organic acid residue, $R^{3a}$ represents a hydrogen atom or a methyl group, u represents an integer from 2 to 5, v represents a number from 0 to 50, w represents an integer from 2 to 5, x represents a number from 3 to 80, and $R^{3b}$ to $R^{3f}$ each independently represent an alkyl group, an alkoxy group, a phenyl group, a substituted phenyl group, a phenoxy group, or a substituted phenoxy group,

$R^{4a}$ represents a hydrogen atom or a methyl group, u' represents an integer from 2 to 5, v' represents a number from 0 to 50, w' represents an integer from 2 to 5, and $R^{4b}$ to $R^{4d}$ each independently represent an alkyl group, -$(OSiR^{51}R^{52})_y$-$OSiR^{53}R^{54}R^{55}$, where y represents an integer from 0 to 20, and $R^{51}$ to $R^{55}$ represent an alkyl group, or -$R^{56}$-$(OC_2H_4)$y'-$OR^{57}$, where y' represents an integer from 1 to 20, $R^{56}$ represents an alkylene group, and $R^{57}$ represents an alkyl group,

$R^{2a}$ and $R^{2l}$ each independently represent a hydrogen atom or a methyl group, k' and p' each independently represent an integer from 2 to 5, l' and q' each independently represent a number from 0 to 50, m' and o' each independently represent an integer from 2 to 5, r and s each independently represent a number from 0 to 20, and $R^{2b}$ to $R^{2k}$ each independently represent an alkyl group, and

$R^{1a}$ and $R^{1f}$ each independently represent a hydrogen atom or a methyl group, k and p each independently represent an integer from 2 to 5, 1 and q each independently represent a number from 0 to 50, m and o each independently represent an integer from 2 to 5, n represents a number from 3 to 80, and $R^{1b}$ to $R^{1c}$ each independently represent an alkyl group, an alkoxy group, a phenyl group, a substituted phenyl group, a phenoxy group, or a substituted phenoxy group.

**2.** The resin composition according to claim 1, wherein a content of the (meth)acrylic copolymer is from 10 to 65 mass% relative to a total mass of the resin composition.

**3.** A resin composition comprising:

a (meth)acrylic copolymer comprising:
a structural unit (A) based on a metal atom-containing polymerizable monomer (a) comprising a structure represented by Formula (1) or (2) and an ethylenically unsaturated bond; and
a structural unit (B) based on at least one polysiloxane block-containing polymerizable monomer (b) selected from the group consisting of a polymerizable monomer represented by Formula (b1), a polymerizable monomer represented by Formula (b2), a polymerizable monomer represented by Formula (b3), and a polymerizable monomer represented by Formula (b4); and
an organic solvent, wherein
a content of the structural unit (A) is from 5 to 35 mass%, a content of the structural unit (B) is from 35 to 75 mass%, and a content of the structural unit based on a (meth)acrylic macromonomer is less than 13 mass% relative to a total mass of all structural units constituting the (meth)acrylic copolymer,
a weight-average molecular weight of the (meth)acrylic copolymer is 2000 or more and 6500 or less,
a content of the organic solvent is 50 mass% or less relative to a total mass of the resin composition, and
a viscosity measured by a Gardner bubble viscometer at 25°C and a solid content concentration of 50 mass% is Z or less:

-CO-O-M-O-CO- (1)

-CO-O-M-$R^0$ (2)

$CH_2$=$CR^{3a}$-CO-O-$(C_uH_{2u}$-O$)_v$-$C_wH_{2w}$-$(SiR^{3b}R^{3c}$-O$)_x$-$SiR^{3d}R^{3e}R^{3f}$ (b1)

$CH_2$=$CR^{4a}$-CO-O-$(C_{u'}H_{2u'}$-$)_{v'}$-$C_{w'}H_{2w'}$-Si$(OSiR^{4b}R^{4c}R^{4d})_3$ (b2)

$CH_2$=$CR^{2a}$-CO-O-$(C_{k'}H_{2k'}$-O$)_{l'}$-$C_{m'}H_{2m'}$-Si($(OSiR^{2b}R^{2c})_{r'}$-$OSiR^{2d}R^{2e}R^{2f})_2$-OSi((O-$SiR^{2g}R^{2h})_s$-$OSiR^{2i}R^{2j}R^{2k})_2$-$C_{o'}H_{2o'}$-(O-$C_{p'}H_{2p'})_{q'}$-O-CO-$CR^{2l}$=$CH_2$ (b3)

$CH_2$=$CR^{1a}$-CO-O-$(C_kH_{2k}$-O$)_l$-$C_mH_{2m}$-$(SiR^{1b}R^{1c}$-O$)_n$-$SiR^{1d}R^{1e}$-$C_oH_{2o}$-(O-$C_pH_{2p})_q$-O-CO-

$CR^{1f}=CH_2$ (b4)

where M represents Zn, Cu, Mg, or Ca, and $R^0$ represents a monovalent organic acid residue,

$R^{3a}$ represents a hydrogen atom or a methyl group, u represents an integer from 2 to 5, v represents a number from 0 to 50, w represents an integer from 2 to 5, x represents a number from 3 to 80, and $R^{3b}$ to $R^{3f}$ each independently represent an alkyl group, an alkoxy group, a phenyl group, a substituted phenyl group, a phenoxy group, or a substituted phenoxy group,

$R^{4a}$ represents a hydrogen atom or a methyl group, u' represents an integer from 2 to 5, v' represents a number from 0 to 50, w' represents an integer from 2 to 5, and $R^{4b}$ to $R^{4d}$ each independently represent an alkyl group, $-(OSiR^{51}R^{52})_y-OSiR^{53}R^{54}R^{55}$, where y represents an integer from 0 to 20, and $R^{51}$ to $R^{55}$ represent an alkyl group, or $-R^{56}-(OC_2H_4)_{y'}-OR^{57}$, where y' represents an integer from 1 to 20, $R^{56}$ represents an alkylene group, and $R^{57}$ represents an alkyl group,

$R^{2a}$ and $R^{2l}$ each independently represent a hydrogen atom or a methyl group, k' and p' each independently represent an integer from 2 to 5, l' and q' each independently represent a number from 0 to 50, m' and o' each independently represent an integer from 2 to 5, r and s each independently represent a number from 0 to 20, and $R^{2b}$ to $R^{2k}$ each independently represent an alkyl group, and

$R^{1a}$ and $R^{1f}$ each independently represent a hydrogen atom or a methyl group, k and p each independently represent an integer from 2 to 5, l and q each independently represent a number from 0 to 50, m and o each independently represent an integer from 2 to 5, n represents a number from 3 to 80, and $R^{1b}$ to $R^{1e}$ each independently represent an alkyl group, an alkoxy group, a phenyl group, a substituted phenyl group, a phenoxy group, or a substituted phenoxy group.

**INTERNATIONAL SEARCH REPORT**

International application No. **PCT/JP2024/030994**

**A. CLASSIFICATION OF SUBJECT MATTER**

***C08F 290/06***(2006.01)i
FI: C08F290/06

According to International Patent Classification (IPC) or to both national classification and IPC

**B. FIELDS SEARCHED**

Minimum documentation searched (classification system followed by classification symbols)

C08F290/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-077095 A (CHUGOKU MARINE PAINTS, LTD.) 23 March 2006 (2006-03-23)<br>claims, paragraphs [0001], [0013], [0115], synthesis example 2, examples 2, 6 | 1-3 |
| Y | WO 2018/181429 A1 (MITSUBISHI CHEMICAL CORPORATION) 04 October 2018 (2018-10-04)<br>claims, paragraphs [0143], [0146], [0162], [0166], examples | 1-3 |
| Y | JP 2022-177034 A (MITSUBISHI CHEMICAL CORPORATION) 30 November 2022 (2022-11-30)<br>claims, paragraphs [0138], [0141], [0158], [0162], examples | 1-3 |
| A | JP 2022-24015 A (CHUGOKU MARINE PAINTS, LTD.) 08 February 2022 (2022-02-08)<br>entire text | 1-3 |
| A | US 5427793 A (MINNESOTA MINING AND MANUFACTURING COMPANY) 27 June 1995 (1995-06-27)<br>claims, examples | 1-3 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/030994**

**C. DOCUMENTS CONSIDERED TO BE RELEVANT**

| Category* | Citation of document, with indication, where appropriate, of the relevant passages | Relevant to claim No. |
|---|---|---|
| A | CN 115477864 A (BOE TECHNOLOGY GROUP CO., LTD.) 16 December 2022 (2022-12-16)<br>claims, examples | 1-3 |

Form PCT/ISA/210 (second sheet) (July 2022)

**INTERNATIONAL SEARCH REPORT**
**Information on patent family members**

International application No.
**PCT/JP2024/030994**

| Patent document cited in search report | Publication date (day/month/year) | Patent family member(s) | Publication date (day/month/year) |
|---|---|---|---|
| JP 2006-077095 A | 23 March 2006 | (Family: none) | |
| WO 2018/181429 A1 | 04 October 2018 | US 2020/0017617 A1<br>claims, paragraphs [0336], [0395], [0402], [0406], examples<br>EP 3604369 A1<br>KR 10-2019-0115088 A<br>CN 110506064 A | |
| JP 2022-177034 A | 30 November 2022 | US 2020/0010697 A1<br>claims, paragraphs [0341], [0396]-[0400], [0407], examples Y<br>WO 2018/181668 A1<br>EP 3604364 A1<br>KR 10-2019-0112331 A<br>CN 110520452 A | |
| JP 2022-24015 A | 08 February 2022 | US 2023/0123769 A1<br>claims, examples<br>WO 2021/182454 A1<br>EP 4119620 A1<br>CN 115298274 A<br>KR 10-2022-0145908 A | |
| US 5427793 A | 27 June 1995 | US 5573782 A<br>WO 1994/023580 A1 | |
| CN 115477864 A | 16 December 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023138774 A
- JP 2002012630 A
- JP 2004300410 A
- WO 2013108880 A